# EUROPÄISCHE PATENTSCHRIFT

(11) **EP 3 743 584 B1**
(45) Veröffentlichungstag und Bekanntmachung des Hinweises auf die Patenterteilung: **05.04.2023**
(21) Anmeldenummer: 19700600.0
(22) Anmeldetag: 17.01.2019
(51) Int. Cl.: E06B 3/663

(54) **ABSTANDHALTER FÜR ISOLIERVERGLASUNGEN MIT INTEGRIERTEM FLACHBANDKABEL**
SPACER FOR INSULATED GLAZING UNITS WITH INTEGRATED FLAT WIRE
DISPOSITIF D'ÉCARTEMENT POUR VITRAGES ISOLANTS DOTÉ DU CÂBLE PLAT INTÉGRÉ

(30) Priorität: 22.01.2018 EP 18152708
(43) Veröffentlichungstag der Anmeldung: 02.12.2020
(73) Patentinhaber: SAINT-GOBAIN GLASS FRANCE, 92400 Courbevoie (FR)
(72) Erfinder: NEANDER, Marcus, 52249 Eschweiler (DE); MARJAN, Christopher, 52072 Aachen (DE); KUSTER, Hans-Werner, 52066 Aachen (DE); MORVAN, Guenael, 13009 Marseille (FR)
(74) Vertreter: Schönen, Iris
(86) Internationale Anmeldenummer: PCT/EP2019/051088
(87) Internationale Veröffentlichungsnummer: WO 2019/141749

(56) Entgegenhaltungen:
- WO-A1-2016/091646
- WO-A1-2016/121332
- WO-A2-2013/109881
- DE-B3- 10 361 184
- US-A1- 2014 247 475

## Beschreibung

Die Erfindung betrifft einen Abstandhalter mit integriertem Flachbandkabel eine Isolierverglasung umfassend einen solchen Abstandhalter, ein Verfahren zu dessen Herstellung und dessen Verwendung.

Isolierverglasungen sind vor allem im Zuge immer strengerer Umweltschutzauflagen nicht mehr aus dem Gebäudebau wegzudenken. Diese werden dabei aus mindestens zwei Scheiben gefertigt, die über mindestens einen umlaufenden Abstandshalter miteinander verbunden sind. Je nach Ausführungsform ist der als Verglasungsinnenraum bezeichnete Zwischenraum der beiden Scheiben luft- oder gasgefüllt, in jedem Fall jedoch frei von Feuchtigkeit. Ein zu hoher Gehalt an Feuchtigkeit im Verglasungszwischenraum führt besonders bei kalten Außentemperaturen zur Kondensation von Wassertropfen im Scheibenzwischenraum, was unbedingt zu vermeiden ist. Zur Aufnahme der nach der Montage im System verbleibenden Restfeuchtigkeit können beispielsweise mit einem Trockenmittel gefüllte Hohlkörperabstandshalter verwendet werden. Da die Aufnahmekapazität des Trockenmittels jedoch begrenzt ist, ist auch in diesem Fall die Abdichtung des Systems von enormer Wichtigkeit um das Eindringen weiterer Feuchtigkeit zu vermeiden.

Isolierverglasungen können über ihre grundsätzliche Funktion hinausgehend auch weitere Elemente in Form von Einbauten oder Scheiben mit steuerbaren Zusatzfunktionen enthalten. Eine Art von modernen, aktiven Verglasungen sind Verglasungen mit schaltbaren oder regelbaren optischen Eigenschaften. Bei solchen Verglasungen kann beispielsweise die Transmission von Licht in Abhängigkeit einer angelegten elektrischen Spannung aktiv beeinflusst werden. Der Benutzer kann beispielsweise von einen transparenten in einen nicht transparenten Zustand der Verglasung schalten, um den Einblick in einen Raum von außen zu verhindern. Bei anderen Verglasungen kann die Transmission stufenlos geregelt werden, beispielsweise um den Eintrag von Sonnenenergie in einem Raum zu regulieren. Dadurch wird eine unerwünschte Erwärmung von Gebäuden oder Fahrzeuginnenräumen vermieden und der durch Klimaanlagen verursachte Energieverbrauch bzw. COz-Ausstoß reduziert. Aktive Verglasungen dienen folglich nicht nur der optisch ansprechenden Gestaltung von Fassaden und einer angenehmen Lichtgestaltung in Innenräumen, sondern sind auch unter energetischen und ökologischen Gesichtspunkten vorteilhaft.

Aktive Verglasungen enthalten ein Funktionselement, welches typischerweise eine aktive Schicht zwischen zwei Flächenelektroden umfasst. Die optischen Eigenschaften der aktiven Schicht können durch eine an die Flächenelektroden angelegte Spannung verändert werden. Ein Beispiel hierfür sind elektrochrome Funktionselemente, die beispielsweise aus US 20120026573 A1 und WO 2012007334 A1 bekannt sind. Ein weiteres Beispiel sind SPD-Funktionselemente (suspended particle device), die beispielsweise aus EP 0876608 B1 und WO 2011033313 A1 bekannt sind. Durch die angelegte Spannung lässt sich die Transmission von sichtbarem Licht durch elektrochrome oder SPD-Funktionselemente steuern. Die Spannungszufuhr erfolgt über sogenannte Sammelleiter (bus bars), die in der Regel auf den Flächenelektroden aufgebracht sind und über geeignete Verbindungskabel mit einer Spannungsquelle verbunden sind.

Wird eine aktive Verglasung in einer Isolierverglasung integriert, so ist die Spannungszufuhr der aktiven Verglasung gas- und wasserdicht auszugestalten um eine hinreichende Qualität und Lebensdauer der Isolierverglasung zu gewährleisten. In WO 2017/106458 A1 wird die elektrische Zuleitung selbst in Form und Größe so gestaltet, dass diese eine höhere Toleranz gegen Relativbewegungen bei unterschiedlicher thermischer Ausdehnung der beteiligten Komponenten aufweist. Die Zuleitung selbst erfolgt jedoch zwischen Abstandhalter und benachbarter Scheibe durch das zur Verklebung und Abdichtung dienende primäre Dichtmittel. Eine derartige Kabeldurchführung durch den Randverbund der Isolierverglasung stellt immer auch eine potenzielle Fehlstelle dar.

Darüber hinaus ist in der Praxis häufig eine elektrische Kontaktierung an mehreren Stellen der Isolierverglasung notwendig. Dabei wird das Anschlusskabel nach dem Stand der Technik im äußeren Scheibenzwischenraum um den Abstandhalterrahmen herumgeführt. Der Abstandhalter ist über ein sogenanntes primäres Dichtmittel mit den Scheiben der Isolierverglasung verklebt, während im äußeren Scheibenzwischenraum ein sekundäres Dichtmittel eingebracht ist, das diesen ausfüllt und eventuell vorhandene elektrische Anschlusskabel umgibt. Das automatisierte Verfüllen des äußeren Scheibenzwischenraums in Gegenwart elektrischer Anschlusskabel erweist sich jedoch als problematisch, da diese beispielsweise einen Roboterarm mit Extrusionsdüse räumlich behindern können. Ferner dürfen keine Luftblasen im äußeren Scheibenzwischenraum verbleiben, beispielsweise zwischen Anschlusskabel und Abstandhalter. Das Volumen der eingeschlossenen Luft variiert mit sich ändernden klimatischen Bedingungen und führt dauerhaft zu Undichtigkeiten der Isolierverglasung im Bereich des Lufteinschlusses.

Um eine verbesserte Dichtigkeit von Isolierverglasungen zu gewährleisten sind bereits die verschiedensten Modifikationen im Bereich der Abstandshalter bekannt. Eine Maßnahme zur Verbesserung der Dichtigkeit von Isolierverglasungen ist die Beschichtung von polymeren Abstandshaltern mit Metallfolien oder alternierenden Metall-Polymer-Schichtsystemen, wie beispielsweise in EP 0 852 280 A1 und WO 2013/104507 A1 offenbart. Diese gewährleisten eine hohe Dichtigkeit des Abstandshalters bei gleichzeitiger Kompatibilität mit den zur Montage verwendeten Dichtstoffen. Die genannten Probleme hinsichtlich der Dichtigkeit von Isolierverglasungen mit elektrischen Zuleitungen werden davon allerdings nicht berührt.

Flachbandkabel sind auf dem Gebiet der Elektrotechnik bekannt und werden beispielsweise zur elektrischen Kontaktierung in Computern verwendet. Unter dem Begriff Flachbandkabel sind dem Fachmann mehradrige Kabel, deren Adern parallel geführt sind, bekannt. Im Gegensatz zu einer zylindrischen Bauweise verfügen Flachbandkabel über eine wesentlich geringere Aufbauhöhe. Die Adern eines Flachbandkabels können beispielsweise als parallel verlaufende Litzen mit Isolierung ausgeführt sein, wobei die Isolierung die Formgebung des Kabels und den Abstand der Adern zueinander (sogenanntes Rastermaß) bestimmt.

Eine Untergruppe der Flachbandkabel sind die Flachbandleitungen, auch als Flat Flex Cable (FFC) bekannt. Diese verfügen ebenfalls über parallel verlaufende Adern, die jedoch als Metallfolien ausgeführt sind. Als die Adern trennende Isolation wird in der Regel eine Kunststofffolie eingesetzt. Als mögliche Bauformen der FFC sind laminierte Flachbandleitungen, sogenannte Flat Laminated Cable (FLC), und extrudierte Flachbandleitungen, sogenannte Flat Extruded Cable (FEC), bekannt. Bei der laminierten Ausführungsform (FLC) befindet sich dabei ein Klebstoff zwischen Metallfolie und umgebender Isolierung, während die Adern bei extrudierten Flachbandleitern (FEC) unmittelbar von der Isolierung umgeben sind. Darüber hinaus sind flexible strukturierte Leiterplatten (Flexible Printed Circuit, FPC) als weitere mögliche Bauform bekannt, die vor allem bei komplexen Leiterstrukturen zum Einsatz kommt.

Flachbandleitungen (FFC) werden aufgrund ihrer platzsparenden Bauweise auch gerne in Kabelbäumen von Kraftfahrzeugen verwendet. So wird beispielsweise in DE 10 2014 119 720 A1 eine Optimierung laminierter Flachbandleitungen für Kraftfahrzeuge angestrebt.

WO 2016 121332 A1 offenbart eine Isolierverglasung mit einer optischen Vorrichtung, wobei eine elektrische Zuleitung durch den Abstandhalter der Isolierverglasung hindurch in den Verglasungsinnenraum geführt wird und ein Metallstreifen im Randverbund der Isolierverglasung innerhalb des Dichtmittels eingelegt ist. Der Metallstreifen ist elektrisch leitend mit der elektrischen Zuleitung verbunden.

WO 2016 091646 A1 offenbart einen Abstandhalter für Isolierverglasungen in Form eines Hohlprofils mit zwei Hohlkammern, wobei eine Nut zur Aufnahme einer Scheibe zwischen den beiden Hohlkammern verläuft. Die Nut ist mit einer gasdurchlässigen Einlage oder mindestens zwei Einlagen mit einem Abstand von mindestens 1 mm ausgestattet, wodurch ein Gasaustausch zwischen den Scheibenzwischenräumen einer Isolierverglasung ermöglicht wird.

WO 2013 109881 A2 offenbart eine Isolierverglasung mit einer elektrochromen Vorrichtung, wobei die elektrischen Zuleitungen im Randverbund der Isolierverglasung innerhalb des primären und sekundären Dichtmittels geführt werden.

In US 2014 0247475 A1 werden Isolierverglasungen mit elektrochromen Vorrichtungen sowie deren elektrische Kontaktierung beschrieben. Zur Führung der Anschlusskabel wird dabei ein Profil in den Randverbund der Isolierverglasung eingesetzt, das zwei Kabelaufnahmen in Form einer Nut aufweist. Eine solche Anordnung ist schwierig mit einem Dichtmittel zu verfüllen, da aufgrund der komplexen Geometrie des Profils luftgefüllte Hohlräume zurückbleiben können.

DE 103 61 184 B3 offenbart eine Photovoltaik-Isolierglasscheibe mit einem Abstandhalterrahmen aus einem Kunststoffprofil, in das eine Stromschiene eingelegt ist. Der Abstandhalterrahmen ist dabei im Bereich, in den die Stromschiene eingelegt ist, nicht durchgängig.

Aufgabe der vorliegenden Erfindung ist es, einen Abstandshalter, der zu einer verbesserten Abdichtung von Isolierverglasungen mit elektrischen Zuleitungen führt, eine Isolierverglasung mit diesem Abstandshalter, sowie ein wirtschaftliches Verfahren zur Herstellung der Isolierverglasung bereitzustellen.

Die Aufgabe der vorliegenden Erfindung wird erfindungsgemäß durch einen Abstandhalter mit integriertem Flachbandkabel, eine Isolierverglasung mit Abstandhalter, ein Verfahren zu deren Herstellung und der Verwendung des Abstandhalters nach den unabhängigen Ansprüchen 1, 11 und 13 gelöst. Bevorzugte Ausführungen der Erfindung gehen aus den Unteransprüchen hervor.

Der erfindungsgemäße Abstandhalter mit integrierten Flachbandkabel für Isolierverglasungen umfasst mindestens einen polymeren Grundkörper umfassend zwei Scheibenkontaktflächen, eine Verglasungsinnenraumfläche und eine Außenfläche. Das mindestens eine Flachbandkabel verläuft an der Außenfläche und ist direkt oder indirekt stoffschlüssig mit der Außenfläche verbunden. Als direkte Verbindung ist dabei eine unmittelbare Anbindung zwischen Flachbandkabel und Grundkörper zu verstehen. Diese tritt beispielsweise ein, wenn die Komponenten ohne Zwischenlage anderer Schichten verbunden sind. Dies ist beispielsweise mittels Coextrusion, Verschweißen oder Laminieren ohne Klebstoff der Fall. Eine indirekte Verbindung entsteht sowohl bei Verkleben oder Laminieren unter Verwendung eines Klebstoffes als auch bei Zwischenlage anderer Komponenten wie beispielsweise einer Barrierefolie. In jedem Fall wird eine stoffschlüssige und vollflächige Verbindung zwischen Grundkörper und Flachbandkabel geschaffen, wobei keine Hohlräume und kein Dichtmittel zwischen Grundkörper und Flachbandkabel vorhanden sind. Hohlräume könnten durch Ausdehnung der darin enthaltenen Luft zu Undichtigkeiten der Isolierverglasung führen. Dichtmittel sind zur Verfüllung des Zwischenraums zwischen Grundkörper und Flachbandkabel ungeeignet, da diese schmale Hohlräume in der Regel nur schlecht ausfüllen und luftgefüllte Hohlräume zurückbleiben. Als Dichtmittel werden in diesem Sinne sowohl die gängigen Dichtmittel zum Anbringen der Scheiben an den Scheibenkontaktflächen des Abstandhalters (oft als primäres Dichtmittel bezeichnet) als auch die äußere Abdichtung (oft als sekundäres Dichtmittel bezeichnet) gesehen.

Die Scheibenkontaktflächen, die Verglasungsinnenraumfläche und die Außenfläche des Grundkörpers bilden gemeinsam einen umlaufend geschlossenen Körper. Dadurch wird die strukturelle Integrität sowie die Dichtheit gegenüber Gasen und Wasser gewährleistet. Der polymere Grundkörper ist mit einer gas- und wasserdichten Barrierefolie versehen.

Die stoffschlüssige Verbindung von Grundkörper und Flachbandkabel ermöglicht eine hohlraumfreie Anbindung des Flachbandkabels an den Abstandhalter, so dass bei Verfüllen des äußeren Scheibenzwischenraums der Isolierverglasung keine Luftblasen in der äußeren Abdichtung verbleiben, die bei thermischer Ausdehnung der eingeschlossenen Luft eine Undichtigkeit des Randverbunds der Isolierverglasung hervorrufen.

Ferner ermöglicht der erfindungsgemäße Abstandhalter die industriell automatisierbare Weiterverarbeitung eines Abstandhalterrahmens umfassend den erfindungsgemäßen Abstandhalter. Da das als elektrische Zuleitung dienende Flachbandkabel stoffschlüssig an der Außenfläche des Abstandhalters geführt wird, kann eine automatisierte Verfüllung des Randbereichs der Verglasung erfolgen, ohne dass die elektrische Zuleitung ein Hindernis für die entlang der Außenseite des Abstandhalters geführte Materialdüse darstellt.

Im Sinne der Erfindung wird der Abstandhalter mit integriertem Flachbandkabel insbesondere dann angewandt, wenn beispielsweise eine Spannungsversorgung an mehreren Stellen der Isolierverglasung notwendig ist und ein nach dem Stand der Technik frei im äußeren Scheibenzwischenraum geführtes Anschlusskabel die automatisierte Weiterverarbeitung stark beeinträchtigen würde.

Ein wesentlicher Vorteil der Erfindung liegt auch im hohen Vorfertigungsgrad des erfindungsgemäßen Abstandhalters mit integrierter elektrischer Zuleitung. Die Leitungen werden dabei bereits im Fertigungsprozess des Abstandhalters in diesem integriert, so dass während der Herstellung der Isolierverglasung keine manuelle Installation der Zuleitungen mehr erforderlich ist. Bei Herstellung der Isolierverglasung sind die bereits auf der Außenfläche des Abstandhalters vorhandenen Zuleitungen lediglich an den erforderlichen Stellen zu kontaktieren. Dazu kann das Flachbandkabel beispielsweise mit einem elektrischen Anschlusskabel elektrisch leitend kontaktiert werden, das zum Anschluss des elektrisch schaltbaren Funktionselementes dient. Da die manuelle Installation der Zuleitungen entfällt, kann der Automatisierungsgrad der Isolierglasherstellung weiter erhöht werden. Ferner ist die Position der elektrischen Zuleitungen exakt zu bestimmen, da diese nicht als lose Kabel im Randverbund liegen, sondern in einer definierten Position auf dem Grundkörper angebracht sind. Dies erleichtert die elektrische Kontaktierung.

Die erste Scheibenkontaktfläche und die zweite Scheibenkontaktfläche stellen die Seiten des Abstandhalters dar, an denen beim Einbau des Abstandhalters die Montage der äußeren Scheiben (erste Scheibe und zweite Scheibe) einer Isolierverglasung erfolgt. Die erste Scheibenkontaktfläche und die zweite Scheibenkontaktfläche verlaufen parallel zueinander.

Die Verglasungsinnenraumfläche ist als die Fläche des Abstandhaltergrundkörpers definiert, die nach Einbau des Abstandhalters in einer Isolierverglasung in Richtung des Innenraums der Verglasung weisen. Die Verglasungsinnenraumfläche liegt dabei zwischen der ersten und der zweiten Scheibe.

Die Außenfläche des Abstandhaltergrundkörpers ist die der Verglasungsinnenraumfläche gegenüberliegende Seite, die vom Innenraum der Isolierverglasung weg in Richtung einer äußeren Versiegelung weist.

Die Außenfläche des Abstandhalters kann in einer möglichen Ausführungsform jeweils benachbart zu den Scheibenkontaktflächen abgewinkelt sein, wodurch eine erhöhte Stabilität des Grundkörpers erzielt wird. Die Außenfläche kann benachbart zu den Scheibenkontaktflächen beispielsweise um jeweils 30-60°, relativ zur Außenfläche, abgewinkelt sein.

Das erfindungsgemäß an der Außenfläche des Abstandhalters eingebrachte Flachbandkabel ist ein ein- oder mehradriges Kabel, dessen Adern parallel geführt sind. Dadurch verfügt das Flachbandkabel über eine wesentlich geringere Aufbauhöhe als die üblicherweise im äußeren Scheibenzwischenraum verwendeten zylindrischen Anschlusskabel. Alle gängigen Flachbandkabel sind aufgrund ihrer flachen Bauweise im Sinne der Erfindung geeignet. Durch ihre flache Bauweise liegen Flachbandkabel bei stoffschlüssiger Verbindung mit der Außenfläche des Abstandhalters bündig an diesem an ohne einen Lufteinschluss zwischen Grundkörper und Kabel oder nach Verfüllung seitlich des Kabels hervorzurufen.

In einer möglichen Ausführungsform des Flachbandkabels umfasst dieses mehrere parallel verlaufende Litzen. Diese sind bevorzugt von einer Isolierung umgeben, die die Litzen zueinander beabstandet und neben ihren isolierenden Eigenschaften auch die Formstabilität des Kabels gewährleistet. Aufgrund der runden Form der benachbarten Litzen ergibt sich eine strukturierte, geriffelte, Oberfläche eines Flachbandkabels enthaltend Litzenleiter. Vor diesem Hintergrund wird ein Flachbandkabel umfassend Litzenleiter bevorzugt mittels eines Klebers auf der Außenfläche des Abstandhalters angebracht, da der Klebstoff die durch die geriffelte Oberfläche entstehenden Hohlräume ausfüllt.

Bevorzugt gehört das im Sinne der Erfindung verwendete Flachbandkabel zur Gruppe der Flachbandleitungen, einer Sonderbauform der Flachbandkabel. Flachbandleitungen (oder Flachbandleiter) sind auch unter den Begriffen Folienleiter, flexible Flachkabel, oder Flachleiter bekannt. Besonders gebräuchlich ist der international verwendete Ausdruck *Flat Flex Cable* (FFC). Diese verfügen ebenfalls über parallel verlaufende Adern, die jedoch als Metallfolien ausgeführt sind. Je nach Anwendung kann der Flachbandleiter auch eine einzelne Ader umfassen.

Flachbandleiter sind in verschiedenen Ausführungsformen mit einer oder mehreren als Metallfolie ausgeführten Adern kommerziell erhältlich. In der Regel umfassen diese eine Isolation in Form einer Kunststofffolie, die die mindestens eine Ader umgibt. Die Verbindung des Leiters (Metallfolienstreifen) und der Isolierung (Kunststofffolie) erfolgt dabei durch Lamination (sogenannte *Flat Laminated Cable* (FLC)) oder Extrusion (sogenannte *Flat Extruded Cable* (FEC)). Bei der laminierten Ausführungsform (FLC) befindet sich dabei ein Klebstoff zwischen Metallfolie und umgebender Isolierung, während die Adern bei extrudierten Flachbandleitern (FEC) unmittelbar von der Isolierung umgeben sind. Diese bereits mit einer isolierenden Kunststofffolie ummantelten Flachbandleiter beider Ausführungsformen sind bevorzugt über einen Klebstoff, über Schweißtechniken (z.B. Ultraschallschweißen) oder Lamination auf der Außenseite des Abstandhalters montierbar. Auf diese Art und Weise ist ein bestehender Abstandhalter einfach mit einem Flachbandleiter nachzurüsten. Da Flachbandleiter über Metallfolien anstelle von Litzen verfügen, kann die Aufbauhöhe der Leitungen weiter verringert werden. Ferner weisen Flachbandleiter eine ebene Oberfläche auf, so dass das Risiko von Lufteinschlüssen weiter vermindert wird.

Eine weitere Bauform der Flachbandleiter sind strukturierte Leiterplatten (sogenannte *Flexible Printed Circuits* (FPC)). Diese werden in alternativen Ausführungsformen der Erfindung eingesetzt, beispielsweise wenn eine komplexe Leiterstruktur mit mehreren Abzweigungen gewünscht ist.

Flachbandleiter enthalten bevorzugt Kupfer und/oder Kupferlegierungen. Alternativ können auch andere elektrisch leitende Materialien verwendet werden. Beispiele hierfür sind Aluminium, Gold, Silber oder Zinn sowie Legierungen davon.

Die elektrische Zuleitung besitzt bevorzugt einen Leitungsquerschnitt von 0,08 mm² bis 2,5 mm².

Beispiele für Folienleiter werden in DE 42 35 063 A1, DE 20 2004 019 286 U1 und DE 93 13 394 U1 beschrieben.

Flachbandleiter bestehen bevorzugt aus einem verzinnten Kupferband mit einer Dicke von 0,03 mm bis 0,45 mm und einer Breite von 0,2 mm bis 6,6 mm. Kupfer hat sich für solche Leiterbahnen bewährt, da es eine gute elektrische Leitfähigkeit sowie eine gute Verarbeitbarkeit zu Folien besitzt. Gleichzeitig sind die Materialkosten niedrig.

Im Sinne der Erfindung werden besonders bevorzugt Flachbandleiter mit einer Dicke von 0,1 mm bis 0,45 mm und einer Breite von 1,0 mm bis 7,0 mm verwendet. Dadurch ist sowohl eine eine gute elektrische Kontaktierbarkeit als auch eine ausreichende Stromtragfähigkeit gewährleistet. Der im Rahmen dieser Abmaße entstehende rechteckige Querschnitt ist ferner vorteilhaft um eine ausreichend große Anbindungsfläche an den Grundkörper über die Breite des Flachbandkabels und eine nur geringe Aufbauhöhe, gegeben durch die geringe Dicke des Flachbandkabels, zu gewährleisten.

Sofern der Flachbandleiter mehrere Leiterbahnen umfasst, stellt das sogenannte Rastermaß eine weitere wichtige Kenngröße zur Beschreibung des Flachbandleiters dar. Das Rastermaß bezeichnet dabei den Abstand zweier paralleler Leiterbahnen, jeweils gemessen von der Mitte der Leiterbahnen, und beträgt für gängige Flachbandleiter 0,5 mm bis 2,54 mm.

In einer möglichen Ausführungsform weist die erfindungsgemäße Isolierverglasung einen Abstandhalter mit polymerem Grundkörper umfassend mindestens eine Hohlkammer auf. Ein geeigneter Abstandhalter mit polymerem Grundkörper ist beispielsweise in WO 2013/104507 A1 offenbart.

Dem Fachmann bekannte Hohlprofilabstandhalter enthalten mindestens eine Hohlkammer in einem in der Regel polymeren oder metallischen Grundkörper. Die Hohlkammer grenzt an die Verglasungsinnenraumfläche, wobei die Verglasungsinnenraumfläche sich oberhalb der Hohlkammer befindet und die Außenfläche des Abstandhalters sich unterhalb der Hohlkammer befindet. Oberhalb ist in diesem Zusammenhang als dem inneren Scheibenzwischenraum der Isolierverglasung zugewandt und unterhalb als dem Scheibeninnenraum abgewandt definiert.

Die Hohlkammer des Abstandhalters führt zu einer Gewichtsreduktion im Vergleich zu einem massiv ausgeformten Abstandhalter und steht zur Aufnahme von weiteren Komponenten, wie beispielsweise eines Trockenmittels, zur Verfügung.

In der erfindungsgemäßen Ausführungsform des Abstandhalters umfasst dieser einen polymeren Grundkörper. Dies ist vorteilhaft, da die Wärmeleitfähigkeit von Kunststoffen wesentlich geringer ist als die Wärmeleitfähigkeit von Metallen. Des Weiteren weist der Kunststoff des polymeren Grundkörpers einen spezifischen Widerstand von mindestens 10⁸ Ω cm auf und ist somit nichtleitend für elektrischen Strom. Dies ist besonders vorteilhaft, da es in diesem Fall keiner weiteren Isolierung zwischen Grundkörper und elektrischem Leiter des Flachbandkabels bedarf. Auch in diesem Fall kann ein Flachbandkabel, bevorzugt ein Flachbandleiter, mit oder ohne eine äußere Isolierung auf den polymeren Grundkörper aufgebracht werden. Die sich ergebenen Vorteile wurden bereits beschrieben.

Die Verwendung von Abstandhaltern mit polymerem Grundkörper hat sich als besonders vorteilhaft erwiesen, da in diesem Fall stoffschlüssige Anbindung innerhalb einer Barrierefolie des Grundkörpers auf einfache Art und Weise möglich ist. Ferner können wichtige Kernfunktionen des Randverbundes, wie Gas- und Wasserdichtigkeit, geringer Wärmedurchgangskoeffizient, Aufnahme von Trockenmittel und Zuleitungen zur elektrischen Kontaktierung, in Form eines einzelnen Bauteils zur Verfügung gestellt werden. Dadurch wird die Produktion der Isolierverglasung entscheidend vereinfacht.

Sofern das Flachbandkabel eine Isolierung umfasst, so besitzt diese einen spezifischen Widerstand von größer oder gleich 10⁸ Ω cm. Die Isolierung umfasst bevorzugt Polyvinylchlorid, Polyethernaphthalat, Polyethylen, Polyimid, Gummi, Polyurethan und/oder Polymere aus der Gruppe der Polyester. Insbesondere Polyesterisolationen sind sowohl kostengünstig als auch umweltverträglich und werden vor allem in Form einer den Flachbandleiter umgebenden Folie verwendet.

Da der erfindungsgemäße Abstandhalter einen polymeren Grundkörper aufweist, werden weitere Maßnahmen zur Verbesserung der Gasdichtigkeit des Grundkörpers vorgesehen. Erfindungsgemäß ist mindestens auf der Außenfläche des polymeren Grundkörpers, bevorzugt auf der Außenfläche und auf einem Teil der Scheibenkontaktflächen, eine gas- und dampfdichte Barriere aufgebracht. Die gas- und dampfdichte Barriere verbessert die Dichtigkeit des Abstandhalters gegen Gasverlust und Eindringen von Feuchtigkeit. Bevorzugt ist die Barriere auf etwa der Hälfte bis zwei Drittel der Scheibenkontaktflächen aufgebracht. Ein geeigneter Abstandhalter mit polymerem Grundkörper ist beispielsweise in WO 2013/104507 A1 offenbart.

Die gas- und dampfdichte Barriere ist auf der Außenfläche des polymeren Abstandhalters als Folie ausgeführt. Diese Barrierefolie enthält mindestens eine polymere Schicht sowie eine metallische Schicht oder eine keramische Schicht. Dabei beträgt die Schichtdicke der polymeren Schicht zwischen 5 µm und 80 µm, während metallische Schichten und/oder keramische Schichten mit einer Dicke von 10 nm bis 200 nm eingesetzt werden. Innerhalb der genannten Schichtdicken wird eine besonders gute Dichtigkeit der Barrierefolie erreicht. Die Barrierefolie kann auf dem polymeren Grundkörper aufgebracht werden, beispielsweise geklebt werden. Alternativ kann die Folie mit dem Grundkörper zusammen co-extrudiert werden.

Besonders bevorzugt enthält die Barrierefolie mindestens zwei metallische Schichten und/oder keramische Schichten, die alternierend mit mindestens einer polymeren Schicht angeordnet sind. Die Schichtdicken der einzelnen Schichten sind bevorzugt wie im vorhergehenden Absatz beschrieben. Bevorzugt werden die außenliegenden Schichten dabei von der polymeren Schicht gebildet. In dieser Anordnung sind die metallischen Schichten besonders gut vor Beschädigung geschützt. Die alternierenden Schichten der Barrierefolie können auf die verschiedensten nach dem Stand der Technik bekannten Methoden verbunden bzw. aufeinander aufgetragen werden. Methoden zur Abscheidung metallischer oder keramischer Schichten sind dem Fachmann hinlänglich bekannt. Die Verwendung einer Barrierefolie mit alternierender Schichtenabfolge ist besonders vorteilhaft im Hinblick auf die Dichtigkeit des Systems. Ein Fehler in einer der Schichten führt dabei nicht zu einem Funktionsverlust der Barrierefolie. Im Vergleich dazu kann bei einer Einzelschicht bereits ein kleiner Defekt zu einem vollständigen Versagen führen. Des Weiteren ist die Auftragung mehrerer dünner Schichten im Vergleich zu einer dicken Schicht vorteilhaft, da mit steigender Schichtdicke die Gefahr interner Haftungsprobleme ansteigt. Ferner verfügen dickere Schichten über eine höhere Leitfähigkeit, so dass eine derartige Folie thermodynamisch weniger geeignet ist.

Die polymere Schicht der Folie umfasst bevorzugt Polyethylenterephthalat, Ethylenvinylalkohol, Polyvinylidenchlorid, Polyamide, Polyethylen, Polypropylen, Silikone, Acrylonitrile, Polyacrylate, Polymethylacrylate und/oder Copolymere oder Gemische davon. Die metallische Schicht enthält bevorzugt Eisen, Aluminium, Silber, Kupfer, Gold, Chrom und/oder Legierungen oder Oxide davon. Die keramische Schicht der Folie enthält bevorzugt Siliziumoxide und/oder Siliziumnitride.

In einer besonders bevorzugten Ausführungsform weist die gas- und dampfdichte Barriere mindestens eine metallische Schicht oder keramische Schicht auf, die als Beschichtung ausgeführt ist und Aluminium, Aluminiumoxide und / oder Siliciumoxide enthält und bevorzugt über ein PVD-Verfahren (physikalische Gasphasenabscheidung) aufgebracht ist.

Der polymere Grundkörper enthält bevorzugt Polyethylen (PE), Polycarbonate (PC), Polypropylen (PP), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), bevorzugt Acrylnitril-Butadien-Styrol (ABS), Acrylester-Styrol-Acrylnitril (ASA), Acrylnitril-Butadien-Styrol/Polycarbonat (ABS/PC), Styrol-Acrylnitril (SAN), PET/PC, PBT/PC und/oder Copolymere oder Gemische davon. Mit diesen Materialien werden besonders gute Ergebnisse erzielt.

Bevorzugt ist der polymere Grundkörper glasfaserverstärkt. Durch die Wahl des Glasfaseranteils im Grundkörper kann der Wärmeausdehnungskoeffizient des Grundkörpers variiert und angepasst werden. Durch Anpassung des Wärmeausdehnungskoeffizienten des polymeren Grundkörpers und der Barrierefolie lassen sich temperaturbedingte Spannungen zwischen den unterschiedlichen Materialien und ein Abplatzen der Barrierefolie oder vermeiden. Der Grundkörper weist bevorzugt einen Glasfaseranteil von 20 % bis 50 %, besonders bevorzugt von 30 % bis 40 % auf. Der Glasfaseranteil im polymeren Grundkörper verbessert gleichzeitig die Festigkeit und Stabilität.

In einer weiteren bevorzugten Ausführungsform ist der polymere Grundkörper gefüllt durch Glashohlkugeln oder Glasblasen. Diese Glashohlkugeln haben einen Durchmesser von 10 µm bis 20 µm und verbessern die Stabilität des polymeren Hohlprofils. Geeignete Glaskugeln sind unter dem Namen "3M^{™} Glass Bubbles" käuflich erhältlich. Besonders bevorzugt enthält der polymere Grundkörper Polymere, Glasfasern und Glaskugeln. Eine Beimischung von Glaskugeln führt zu einer Verbesserung der thermischen Eigenschaften des Hohlprofils.

Das Flachbandkabel ist unmittelbar über die gas- und dampfdichte Barrierefolie in den Abstandhalter mit polymerem Grundkörper integriert. Dabei werden aufgrund ihrer geringen Bauhöhe bevorzugt Flachbandleiter verwendet.

In einer ersten erfindungsgemäßen Ausführungsform ist ein Flachbandkabel zwischen der Außenfläche des polymeren Grundkörpers und der gas- und dampfdichten Barrierefolie integriert. Dabei kann beispielsweise mindestens ein Metallfolienleiter vor Anbringen der gas- und dampfdichten Barrierefolie auf den Grundkörper aufgebracht werden und die gas- und dampfdichte Barriere so auf den Metallfolienleiter aufgelegt werden, dass eine polymere Schicht benachbart zum Metallfolienleiter liegt. Somit wird bereits alleinig durch die Anordnung der Komponenten eine elektrische Isolation des elektrischen Leiters zur Umgebung erreicht. Sofern ein Flachbandkabel in Nachbarschaft zu einer metallischen Schicht der Barrierefolie angebracht werden soll, so wird eine Isolierung oder ein isolierender Klebstoff zwischen der metallischen Schicht und dem elektrischen Leiter des Flachbandkabels vorgesehen. Die Integration eines Flachbandkabels zwischen Grundkörper und Barrierefolie hat den Vorteil, dass kein gesonderter Prozessschritt zur Integration des Flachbandkabels notwendig ist und dieses gleichzeitig mit der Barrierefolie mit dem Grundkörper verklebt, verschweißt (bevorzugt mittels Ultraschallschweißen), laminiert oder coextrudiert werden kann.

In einer zweiten erfindungsgemäßen Ausführungsform verläuft das Flachbandkabel, auch hier aufgrund der Aufbauhöhe bevorzugt ein Flachbandleiter, innerhalb der gas- und dampfdichten Barrierefolie und grenzt bevorzugt an zwei polymere Schichten. Bezüglich der Verbindung der Komponenten gelten die für die erste erfindungsgemäße Ausführungsform beschriebenen Details. Die zweite erfindungsgemäße Ausführungsform ist vorteilhaft, da beispielsweise bei Verkleben, Laminieren oder Verschweißen der Barrierefolie und des Grundkörpers das Flachbandkabel bereits in der Barrierefolie integriert ist. So muss das Flachbandkabel nicht als einzelne Komponente zwischengelegt werden, sondern wird zusammen mit der Barrierefolie bereitgestellt.

In einer dritten erfindungsgemäßen Ausführungsform ist das Flachbandkabel an der der Außenfläche des Grundkörpers abgewandten Oberfläche der gas- und dampfdichten Barrierefolie angebracht. Bezüglich möglicher Verbindetechniken, der Notwendigkeit einer Isolation des elektrischen Leiters und weiterer Details gelten die Ausführungen zur ersten und zweiten erfindungsgemäßen Ausführungsform. Die dritte erfindungsgemäße Ausführungsform ist vorteilhaft, da die gas- und dampfdichte Barrierefolie bei Kontaktierung des elektrischen Leiters nicht punktuell im Bereich der Kontaktierung entfernt werden muss. Ein Entfernen der Folie birgt das Risiko auch benachbarte Bereiche der Außenfläche zu beschädigen und so eine Undichtigkeit des Abstandhalters herbeizuführen. Ferner kann das Flachbandkabel in dieser Ausführungsform auch als an mindestens einer Oberfläche nicht isolierter Metallfolienstreifen ausgeführt werden. Dieser wird so auf den Grundkörper mit Barrierefolie aufgebracht, dass die Oberfläche ohne Isolierung in Richtung des äußeren Scheibenzwischenraums weist und somit das Abisolieren des elektrischen Leiters entfällt.

Besonders bevorzugt ist das Flachbandkabel gemäß der beschriebenen ersten, zweiten oder dritten Ausführungsform gemeinsam mit der Barrierrefolie auf den polymeren Grundkörper aufgeklebt, auflaminiert oder bei Coextrusion von polymerem Grundkörper und Barrierefolie innerhalb der Barrierefolie oder auf einer der Oberflächen der Barrierefolie in den Schichtstapel integriert.

Das Flachbandkabel verläuft bevorzugt auf einer Länge von mindestens 10 cm, besonders bevorzugt mindestens 20 cm, insbesondere mindestens 30 cm entlang der Außenfläche eines aus dem erfindungsgemäßen Abstandhalter zusammengesetzten Abstandhalterrahmen. Die Vorteile der Erfindung kommen besonders zum Tragen, wenn längere Abschnitte einer frei im äußeren Scheibenzwischenraum liegenden Zuleitung vermieden werden können, da diese im weiteren Verarbeitungsprozess der Isolierverglasung besonders hinderlich sind.

Das Flachbandkabel ist geeignet um mit einer Spannungsversorgung und einem elektrischen Verbraucher kontaktiert zu werden. Nach Montage des erfindungsgemäßen Abstandhalters in einer Isolierverglasung liegt die Spannungsversorgung dabei außerhalb des Verglasungsinnenraums und der elektrische Verbraucher innerhalb des Verglasungsinnenraums.

Das Flachbandkabel ist bevorzugt mittels jeweils mindestens eines elektrischen Anschlusskabels an dem elektrischen Verbraucher und der Spannungsversorgung kontaktiert. Dem Fachmann sind diverse als elektrische Anschlusskabel geeignete Kabelformen bekannt. Das mindestens eine elektrische Anschlusskabel kann beispielsweise als Litzenleiter oder Flachbandleiter, bevorzugt als Flachbandleiter, ausgeführt sein. Die in einer bevorzugten Ausführungsform an der Außenseite des Grundkörpers aufgebrachten Flachbandleiter eignen sich aufgrund ihrer flachen Bauform sehr gut zur Verwendung als elektrische Anschlusskabel. Ein elektrisches Anschlusskabel kann nach Montage einer Isolierverglasung mit erfindungsgemäßem Abstandhalter beispielsweise entlang der ersten oder zweiten Scheibenkontaktfläche in den Verglasungsinnenraum geführt werden. Eine flache Bauart des Anschlusskabels ist dabei vorteilhaft um auch an der Stelle, an der das Anschlusskabel in den Verglasungsinnenraum eingeführt wird, eine möglichst hohe Schichtdicke des die Scheiben und den Abstandhalter verbindenden Dichtmittels zu erreichen. Ferner liegt ein Flachbandleiter als elektrisches Anschlusskabel auch an der Kontaktierungsstelle zwischen an der Außenfläche verlaufendem Flachbandkabel und Anschlusskabel sehr flach an der Außenfläche des Grundkörpers an. Bevorzugt werden alle elektrischen Anschlusskabel und das an der Außenfläche des Grundkörpers verlaufende Flachbandkabel als Flachbandleiter (umfassend Metallfolien) ausgeführt. Dies ist vorteilhaft um in Summe einen möglichst flachen Aufbau sowie eine optimale elektrische Kontaktierung zu erreichen.

Das mindestens eine elektrische Anschlusskabel ist durch Löten, Kleben mittels eines elektrisch leitfähigen Klebstoffs, Schweißen (z.B. Ultraschallschweißen) oder mittels anderer dem Fachmann bekannter Verfahren zum Verbinden elektrischer Leiter elektrisch leitend mit dem an der Außenfläche des Abstandhalters befindlichen Flachbandkabel verbunden.

Bevorzugt wird eine Isolierung des Flachbandkabels in dem Bereich, in dem die Kontaktierung des elektrischen Anschlusskabels erfolgen soll, entfernt. Geeignete Verfahren zum Entfernen der Isolierung sind dem Fachmann hinreichend bekannt. Dazu zählen beispielsweise mechanische Verfahren wie Schaben, Schleifen und Fräsen oder auch thermische Verfahren wie thermische Abisolation mit Prozessgas oder thermische Abisolation mittels Laserverfahren (beispielsweise mittels eines COz-Lasers).

In einer möglichen Ausführungsform ist das mindestens eine elektrische Anschlusskabel über einen elektrisch leitenden Kontaktstift, beispielsweise einen Metallstift, der im Bereich des Flachbandkabels in den Abstandhalter eingepresst wird, mit dem Flachbandkabel kontaktiert. Das Anschlusskabel wird dabei mittels gängiger Methoden zur elektrischen Kontaktierung an den Kontaktstift angebunden. Eine Kontaktierung über einen in die Außenfläche eingedrückten Kontaktstift ist insbesondere bei Verwendung polymerer Grundkörper mit Barrierefolien vorteilhaft. Eine Entfernung eventuell vorhandener elektrischer Isolierungen, die mit einer unerwünschten Beschädigung der Barrierefolie einhergehen kann, entfällt dabei.

In einer besonders bevorzugten Ausführungsform ist der Abstandhalter ein Doppelabstandhalter, der mindestens eine zusätzliche Scheibe in einer Nut aufnehmen kann. Diese werden beispielsweise für Dreifachverglasungen verwendet, bei denen die dritte Scheibe in einer Nut zwischen der ersten Scheibe und der zweiten Scheibe eingesetzt wird. Derartige Abstandhalter sind unter anderem aus WO 2014/198431 A1 bekannt.

Der Doppelabstandhalter umfasst einen Grundkörper mit erster Scheibenkontaktfläche und einer parallel dazu verlaufenden zweiten Scheibenkontaktfläche, eine Verglasungsinnenraumfläche und eine Außenfläche. Der Grundaufbau entspricht dem beschriebenen Abstandhalter für Doppelverglasungen. Die Verglasungsinnenraumfläche wird durch die Nut in zwei Teilbereiche unterteilt. In den Grundkörper sind optional eine erste Hohlkammer und eine zweite Hohlkammer eingebracht, die durch die Nut voneinander getrennt sind. Die erste Hohlkammer grenzt in diesem Fall an einen ersten Teilbereich der Verglasungsinnenraumfläche, während die zweite Hohlkammer an einen zweiten Teilbereich der Verglasungsinnenraumfläche angrenzt, wobei die Verglasungsinnenraumfläche sich oberhalb der Hohlkammern befinden und die Außenfläche sich unterhalb der Hohlkammern befindet. Oberhalb ist in diesem Zusammenhang als dem Scheibeninnenraum einer Isolierverglasung mit erfindungsgemäßem Abstandshalter zugewandt und unterhalb als dem Scheibeninnenraum abgewandt definiert. Da die Nut zwischen der ersten Verglasungsinnenraumfläche und zweiten Verglasungsinnenraumfläche verläuft, begrenzt sie diese seitlich und trennt die erste Hohlkammer und die zweite Hohlkammer voneinander. Die Seitenflanken der Nut werden dabei von den Wänden der ersten Hohlkammer und der zweiten Hohlkammer gebildet. Alternativ kann der Raum seitlich der Nut auch massiv ausgestaltet sein anstelle von Hohlkammern. Die Nut bildet eine Vertiefung, die geeignet ist die mittlere Scheibe (dritte Scheibe) einer Isolierverglasung aufzunehmen. Dadurch wird die Position der dritten Scheibe über zwei Seitenflanken der Nut sowie die Bodenfläche der Nut fixiert. Eine erste und eine zweite Scheibe können an der ersten und zweiten Scheibenkontaktfläche des Abstandhalters angebracht werden.

Die Führung des Flachbandkabels an der Außenfläche eines Doppelabstandhalters sowie dessen Ausführungsdetails sind analog zu den bereits beschriebenen Details des Abstandhalters ohne Nut. Im Falle eines Abstandhalters für Dreifach- oder Mehrfachisolierverglasungen besteht jedoch eine zusätzliche Möglichkeit zur Einführung eines elektrischen Anschlusskabels in den Verglasungsinnenraum. Ein elektrisches Anschlusskabel kann nicht nur entlang der ersten oder zweiten Scheibenkontaktfläche in den Verglasungsinnenraum geführt werden, sondern auch in die Nut eingeführt werden. Dies ist vorteilhaft, da auf diese Weise ein auf der dritten Scheibe einer Isolierverglasung befindliches elektrisch schaltbares Funktionselement für den Betrachter unsichtbar innerhalb der Nut elektrisch kontaktiert werden kann.

Optional umfasst die Nut eines erfindungsgemäßen Doppelabstandhalters eine Einlage. Die Einlage verhindert ein Verrutschen der Scheibe und eine dadurch bedingte Geräuschentwicklung beim Öffnen und Schließen des Fensters. Die Einlage kompensiert des Weiteren die thermische Ausdehnung der dritten Scheibe bei Erwärmung, so dass unabhängig von den klimatischen Bedingungen eine spannungsfreie Fixierung gewährleistet ist. Die Einlage kann im Bereich der elektrischen Kontaktierung ausgespart sein um den für die Kontaktierung benötigten Platz zur Verfügung zu stellen.

In einer besonders bevorzugten Ausführungsform der Erfindung ist der Abstandhalter ein Abstandhalter für Dreifachverglasungen umfassend mindestens eine Nut zur Aufnahme einer dritten Scheibe, wobei die Nut eine Eintrittsöffnung, bevorzugt in der Bodenfläche der Nut, umfasst. Dies ist vorteilhaft, da die Eintrittsöffnung im Einbauzustand des Abstandhalters für den Betrachter nicht sichtbar ist und gleichzeitig die Verklebung des Abstandhalters mit den benachbarten Scheiben nicht durch ein hindurchtretendes Kabel beeinflusst wird.

Bevorzugt umfasst die Nut ein Kontaktelement, das ein elektrisch schaltbares Funktionselement der dritten Scheibe elektrisch leitend kontaktiert. Besonders bevorzugt ragt das Kontaktelement durch die Eintrittsöffnung der Nut hindurch und tritt an der Außenfläche des Abstandhalters aus diesem heraus. Dieser Teil des Kontaktelements befindet sich demnach in direkter Nachbarschaft zum an der Außenseite des Grundkörpers befindlichen Flachbandkabel und kann somit auf einfache Art und Weise über ein elektrisches Anschlusskabel mit diesem kontaktiert werden.

Bevorzugt weist die Verglasungsinnenraumfläche des Abstandhalters mindestens eine Öffnung auf. Bevorzugt sind mehrere Öffnungen in der Verglasungsinnenraumfläche angebracht. Die Gesamtzahl der Öffnungen hängt dabei von der Größe der Isolierverglasung ab. Die Öffnungen verbinden die Hohlkammer mit dem inneren Scheibenzwischenraum, wodurch ein Gasaustausch zwischen diesen möglich wird. Dadurch wird eine Aufnahme von Luftfeuchtigkeit durch ein in der Hohlkammer befindliches Trockenmittel erlaubt und somit ein Beschlagen der Scheiben verhindert. Die Öffnungen sind bevorzugt als Schlitze ausgeführt, besonders bevorzugt als Schlitze mit einer Breite von 0,2 mm und einer Länge von 2 mm. Die Schlitze gewährleisten einen optimalen Luftaustausch ohne dass Trockenmittel aus der Hohlkammer in den inneren Scheibenzwischenraum eindringen kann.

Der Abstandhalter weist bevorzugt entlang der Scheibenkontaktflächen eine Höhe von 5 mm bis 15 mm, besonders bevorzugt von 5 mm bis 10 mm, auf.

Die Breite der Verglasungsinnenraumfläche, beziehungsweise die Breite der Teilbereiche der Verglasungsinnenraumfläche, die den Abstand zweier benachbarter Scheiben der Isolierverglasung definiert, beträgt 4 mm bis 30 mm, bevorzugt 8 mm bis 16 mm.

Die Erfindung umfasst des Weiteren eine Isolierverglasung mit erfindungsgemäßem Abstandhalter. Die Isolierverglasung umfassend mindestens eine erste Scheibe, eine zweite Scheibe und einen die Scheiben umfassenden umlaufenden erfindungsgemäßen Abstandhalter mit Flachbandkabel.

An die Verglasungsinnenraumfläche des Abstandhalters angrenzend befindet sich der Verglasungsinnenraum der Isolierverglasung. Die Außenfläche des Abstandhalters grenzt hingegen an den äußeren Scheibenzwischenraum. Die erste Scheibe ist dabei an der ersten Scheibenkontaktfläche des Abstandhalters und die zweite Scheibe an der zweiten Scheibenkontaktfläche des Abstandhalters angebracht.

Im Verglasungsinnenraum der Isolierverglasung befindet sich ein elektrisch schaltbares Funktionselement, dessen Spannungsversorgung über das an der Außenfläche des Abstandhalters befindliche Flachbandkabel gewährleistet werden soll. Dazu wird das Flachbandkabel an einer Stelle über ein elektrisches Anschlusskabel mit der Spannungsversorgung kontaktiert und an mindestens einer anderen Stelle über ein elektrisches Anschlusskabel mit dem elektrisch schaltbaren Funktionselement im Verglasungsinnenraum elektrisch leitend verbunden. Die verschiedenen Adern des Flachbandkabels können beispielsweise zur Trennung verschiedener Polaritäten genutzt werden.

Die erste und die zweite Scheibe sind an den Scheibenkontaktflächen bevorzugt über ein Dichtmittel angebracht, das zwischen der ersten Scheibenkontaktfläche und der ersten Scheibe und/oder der zweiten Scheibenkontaktfläche und der zweiten Scheibe angebracht ist.

Das Dichtmittel enthält bevorzugt Butylkautschuk, Polyisobutylen, Polyethylenvinylalkohol, Ethylenvinylacetat, Polyolefin-Kautschuk, Polypropylen, Polyethylen, Copolymere und/oder Gemische davon.

Das Dichtmittel ist bevorzugt in mit einer Dicke von 0,1 mm bis 0,8 mm, besonders bevorzugt 0,2 mm bis 0,4 mm in den Spalt zwischen Abstandhalter und Scheiben eingebracht.

Der äußere Scheibenzwischenraum der Isolierverglasung ist bevorzugt mit einer äußeren Abdichtung verfüllt. Diese äußere Abdichtung dient vor allem der Verklebung der beiden Scheiben und somit der mechanischen Stabilität der Isolierverglasung.

Die äußere Abdichtung enthält bevorzugt Polysulfide, Silikone, Silikonkautschuk, Polyurethane, Polyacrylate, Copolymere und/oder Gemische davon. Derartige Stoffe haben eine sehr gute Haftung auf Glas, so dass die äußere Abdichtung eine sichere Verklebung der Scheiben gewährleistet. Die Dicke der äußeren Abdichtung beträgt bevorzugt 2 mm bis 30 mm, besonders bevorzugt 5 mm bis 10 mm.

Die äußere Abdichtung kann zusätzlich auch der Isolation des Flachbandkabels gegenüber der Umgebung dienen. Dies ist der Fall, wenn auf der der Außenseite des Abstandhalters abgewandten Oberfläche des Flachbandkabels keine gesonderte Isolierung angebracht ist. Dies ist vorteilhaft, da das Flachbandkabel mit elektrischen Anschlusskabeln kontaktiert werden kann ohne zunächst eine Isolierung entfernen zu müssen. Die Isolierung der Anordnung gegenüber der Umgebung findet somit erst bei Verfüllen des äußeren Scheibenzwischenraums statt. Bei der Materialauswahl der äußeren Abdichtung muss gegebenenfalls die Größe der anliegenden Spannung beachtet werden, um ein Abdichtungsmaterial mit hinreichenden Isolationseigenschaften auszuwählen. Der elektrische Widerstand der genannten Abdichtungsmaterialien ist aus der Literatur bekannt, so dass der Fachmann eine derartige Abschätzung mit geringem Aufwand treffen kann. Viele der in Verglasungen gängigen elektrisch schaltbaren Funktionselemente benötigen jedoch nur geringe Spannungen, so dass eine ausreichende Isolierung in der Regel mit allen der genannten Materialien problemlos möglich ist.

Je nach Ausgestaltung des elektrisch schaltbaren Funktionselements können mehrere Flachbandkabel oder Adern eines Flachbandkabels unterschiedlicher Polarität bestehen, die an verschiedenen Positionen des elektrisch schaltbaren Funktionselements mit diesem kontaktiert werden.

Das eigentliche Funktionselement mit elektrisch schaltbaren optischen Eigenschaften wird mindestens durch zwei elektrisch leitfähige Schichten und eine aktive Schicht gebildet. Die elektrisch leitfähigen Schichten bilden dabei Flächenelektroden. Durch Anlegen einer Spannung an die Flächenelektroden, beziehungsweise durch Änderung der an den Flächenelektroden anliegenden Spannung können die optischen Eigenschaften der aktiven Schicht, insbesondere die Transmission und/oder die Streuung von sichtbarem Licht beeinflusst werden.

Die elektrisch leitfähigen Schichten sind bevorzugt transparent. Die elektrisch leitfähigen Schichten enthalten bevorzugt zumindest ein Metall, eine Metalllegierung oder ein transparentes leitfähiges Oxid (*transparent conducting oxide,* TCO). Die elektrisch leitfähigen Schichten enthalten bevorzugt zumindest ein transparentes leitfähiges Oxid.

Die elektrisch leitfähigen Schichten weisen bevorzugt eine Dicke von 10 nm bis 2 µm auf, besonders bevorzugt von 20 nm bis 1 µm, ganz besonders bevorzugt von 30 nm bis 500 nm und insbesondere von 50 nm bis 200 nm. Damit wird eine vorteilhafte elektrische Kontaktierung der aktiven Schicht erreicht.

Die elektrisch leitfähigen Schichten sind dafür vorgesehen, mit zumindest einer externen Spannungsquelle elektrisch leitend verbunden zu werden, um als Flächenelektroden des schaltbaren Funktionselements zu dienen.

Das eigentliche schaltbare Funktionselement kann prinzipiell jedes dem Fachmann an sich bekannte Funktionselement mit elektrisch schaltbaren optischen Eigenschaften sein. Die Ausgestaltung der aktiven Schicht richtet sich nach der Art des Funktionselements.

In einer vorteilhaften Ausgestaltung der Erfindung ist im inneren Scheibenzwischenraum ein elektrochromes Funktionselement enthalten. Dabei ist die aktive Schicht der Mehrschichtfolie eine elektrochemisch aktive Schicht. Die Transmission von sichtbarem Licht ist vom Einlagerungsgrad von Ionen in die aktive Schicht abhängig, wobei die Ionen beispielsweise durch eine Ionenspeicherschicht zwischen aktiver Schicht und einer Flächenelektrode bereitgestellt werden. Die Transmission kann durch die an die Flächenelektroden angelegte Spannung, welche eine Wanderung der Ionen hervorruft, beeinflusst werden. Geeignete aktive Schichten enthalten beispielsweise zumindest Wolframoxid oder Vanadiumoxid. Elektrochrome Funktionselemente sind beispielsweise aus WO 2012007334 A1, US 20120026573 A1, WO 2010147494 A1 und EP 1862849 A1 bekannt.

In einer weiteren vorteilhaften Ausgestaltung der Erfindung ist im inneren Scheibenzwischenraum ein PDLC-Funktionselement (Polymer dispersed liquid crystal) angebracht. Dabei enthält die aktive Schicht Flüssigkristalle, welche beispielsweise in eine Polymermatrix eingelagert sind. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Ein solches Funktionselement ist beispielsweise aus DE 102008026339 A1 bekannt.

In einer weiteren vorteilhaften Ausgestaltung der Erfindung umfasst die Isolierverglasung im inneren Scheibenzwischenraum ein elektrolumineszentes Funktionselement. Dabei enthält die aktive Schicht elektrolumineszente Materialen, welche anorganisch oder organisch (OLED) sein können. Durch Anlegen einer Spannung an die Flächenelektroden wird die Lumineszenz der aktiven Schicht angeregt. Solche Funktionselemente sind beispielsweise aus US 2004227462 A1 und WO 2010112789 A2 bekannt.

In einer weiteren vorteilhaften Ausgestaltung der Erfindung ist das elektrisch schaltbare Funktionselement ein SPD-Funktionselement (suspended particle device). Dabei enthält die aktive Schicht suspendierte Partikel, welche bevorzugt in eine zähflüssige Matrix eingelagert sind. Die Absorption von Licht durch die aktive Schicht ist durch das Anlegen einer Spannung an die Flächenelektroden veränderbar, welche zu einer Orientierungsänderung der suspendierten Partikel führt. Solche Funktionselemente sind beispielsweise aus EP 0876608 B1 und WO 2011033313 A1 bekannt.

Das elektrisch schaltbare Funktionselement kann natürlich außer der aktiven Schicht und den elektrisch leitfähigen Schichten weitere an sich bekannte Schichten aufweisen, beispielsweise Barriereschichten, Blockerschichten, Antireflexions- oder Reflexionsschichten, Schutzschichten und/oder Glättungsschichten.

Das elektrisch schaltbare Funktionselement kann alternativ auch eine elektrisch beheizbare Beschichtung, eine in der Isolierverglasung integrierte photovoltaische Beschichtung und/oder ein dünnschichttransistorbasiertes Flüssigkristalldisplay (TFT-basiertes LCD) umfassen.

Das elektrisch schaltbare Funktionselement kann an beliebiger Stelle innerhalb des inneren Scheibenzwischenraums angeordnet sein. Bevorzugt befindet sich das elektrisch schaltbare Funktionselement auf einer der im inneren Scheibenzwischenraum befindlichen Oberflächen der Scheiben der Isolierverglasung.

Bei einer Doppelisolierverglasung ist das elektrisch schaltbare Funktionselement bevorzugt auf der zum inneren Scheibenzwischenraum gerichteten Oberfläche der ersten Scheibe und/oder der zweiten Scheibe angebracht.

Besonders bevorzugt handelt es sich bei der erfindungsgemäßen Isolierverglasung um eine Dreifach- oder Mehrfachisolierverglasung. In diesem Fall ist das elektrisch schaltbare Funktionselement bevorzugt auf der dritten Scheibe oder darüberhinausgehenden weiteren Scheiben, die zwischen der ersten Scheibe und der zweiten Scheibe angeordnet sind, aufgebracht.

In einer besonders bevorzugten Ausführungsform der Erfindung umfasst die Isolierverglasung mindestens drei Scheiben und einen Doppelabstandhalter mit Nut, in dessen Nut die dritte Scheibe eingesetzt ist. Die erste und die zweite Scheibe liegen an den Scheibenkontaktflächen an. Das elektrisch schaltbare Funktionselement ist in diesem Fall auf einer der Oberflächen der dritten Scheibe aufgebracht. Die elektrische Kontaktierung zwischen Flachbandkabel und elektrisch schaltbarem Funktionselement erfolgt dabei in besonders vorteilhafter Weise durch ein die Außenfläche des Abstandhalters durchtretendes Kontaktelement. Alternativ dazu kann auch ein elektrisches Anschlusskabel durch die Eintrittsöffnung in die Nut geführt werden und dort an das Kontaktelement angebunden werden. Ein Herausführen des Kontaktelementes aus der Nut gestaltet sich jedoch einfacher, da das Kontaktelement in der Regel eine höhere mechanische Steifigkeit besitzt als das Anschlusskabel. Ferner ist eine elektrische Kontaktierung zwischen Anschlusskabel und Kontaktelement an der Außenfläche des Abstandhalters aus Platzgründen einfacher zu bewerkstelligen als innerhalb der Nut. Die elektrische Kontaktierung des Funktionselements über das Kontaktelement befindet sich dabei vollständig innerhalb der Nut und ist für den Betrachter nach Montage der Isolierverglasung nicht sichtbar.

Die elektrische Verbindung des Kontaktelements und der elektrisch leitfähigen Schichten des Funktionselements erfolgt bevorzugt über sogenannte Sammelleiter, beispielsweise Streifen eines elektrisch leitfähigen Materials oder elektrisch leitfähige Aufdrucke, mit denen die elektrisch leitfähigen Schichten verbunden werden. Die Sammelleiter, auch als bus bars bezeichnet, dienen der Übertragung elektrischer Leistung und ermöglichen eine homogene Spannungsverteilung. Die Sammelleiter werden vorteilhaft durch Aufdrucken einer leitfähigen Paste hergestellt. Die leitfähige Paste enthält bevorzugt Silber-Partikel und Glasfritten. Die Schichtdicke der leitfähigen Paste beträgt bevorzugt von 5 µm bis 20 µm.

In einer alternativen Ausgestaltung werden dünne und schmale Metallfolienstreifen oder Metalldrähte als Sammelleiter verwendet, die bevorzugt Kupfer und / oder Aluminium enthalten, insbesondere werden Kupferfolienstreifen mit einer Dicke von beispielsweise etwa 50 µm verwendet. Die Breite der Kupferfolienstreifen beträgt bevorzugt 1 mm bis 10 mm. Der elektrische Kontakt zwischen einer als Flächenelektrode dienenden elektrisch leitfähigen Schicht des Funktionselements und dem Sammelleiter kann beispielsweise durch Auflöten oder Kleben mit einem elektrisch leitfähigen Kleber hergestellt werden.

In einer vorteilhaften Ausführungsform der Erfindung ist eine dritte Scheibe mit elektrisch schaltbarem Funktionselement in die Nut eines Doppelabstandhalters eingesetzt, wobei ein Sammelleiter entlang der Scheibenkante der dritten Scheibe aufgedruckt ist. Der Sammelleiter ist dabei so bemessen, dass dieser nach Einsetzen der Scheibe in die Nut des Abstandhalters vollständig von der Nut verdeckt wird. Demnach ergibt sich die Höhe des Sammelleiters, gemessen senkrecht zur nächstliegenden Scheibenkante, aus der Höhe der Nut des Abstandhalters abzüglich des Abstandes von Sammelleiter und nächstliegender Scheibenkante. Bevorzugt weist die Nut eine Höhe von 3 mm bis 10 mm, besonders bevorzugt 3 mm bis 6 mm, beispielsweise 5 mm auf, und die Höhe des Sammelleiters beträgt 2 mm bis 9 mm, bevorzugt 2 mm bis 5 mm. Der Abstand des Sammelleiters zur nächstliegenden Scheibenkante beträgt beispielsweise 1 mm.

Auch unter Verwendung von Sammelleitern ist somit eine für den Betrachter unsichtbare Kontaktierung innerhalb der Nut möglich. Alternativ kann der Sammelleiter weiterhin im sichtbaren Bereich der Scheibe liegen und dabei beliebig weit von der nächstliegenden Scheibenkante entfernt sein. Optional kann der Sammelleiter dabei von dekorativen Elementen, beispielsweise einem Siebdruck verdeckt sein.

Erfindungsgemäß besitzt der Doppelabstandhalter mit Nut einen polymeren Grundkörper, wodurch ein Kurzschluss zwischen stromführenden Bauteilen innerhalb der Nut des Abstandhalters und einem metallischen Grundkörper des Abstandhalters vermieden wird. Nicht erfindungsgemäß kann auch ein metallischer Grundkörper verwendet werden sofern eine entsprechende Isolierung in die Nut des metallischen Grundkörpers eingelegt wird, die einen direkten Kontakt des metallischen Grundkörpers mit stromführenden Komponenten verhindert. Dies ist jedoch im Herstellungsprozess aufwändig und birgt potentielle Fehlerquellen, so dass die Verwendung polymerer Grundkörper bevorzugt ist, auch im Hinblick auf deren weitere Vorteile hinsichtlich einer verminderten Wärmeleitfähigkeit.

Die elektrische Kontaktierung zwischen elektrischem Anschlusskabel und Sammelleiter kann sowohl mittelbar über Kontaktelemente als auch unmittelbar erfolgen. Kontaktelemente werden verwendet um eine möglichst gute Anbindung an den Sammelleiter im Hinblick auf mechanische Stabilität der Verbindung und Minimierung eines unerwünschten Spannungsabfalls zu erzielen. Dem Fachmann sind geeignete Mittel bekannt um das Kontaktelement beispielsweise durch Löten oder Kleben mittels eines leitfähigen Klebstoffs elektrisch leitend am Sammelleiter zu fixieren.

Bevorzugt ist das Kontaktelement als Federkontakt ausgeführt. Dies ist besonders vorteilhaft, da auf diese Weise eine reversible Verbindung von Kontaktelement und Sammelleiter besteht und der elektrische Kontakt zwischen Kontaktelement und Sammelleiter bereits unmittelbar durch Einsetzen der den Sammelleiter tragenden Scheibe in die Nut des Abstandhalters zustande kommt.

Die erste Scheibe, die zweite Scheibe und/oder die dritte Scheibe der Isolierverglasung enthalten bevorzugt Glas, besonders bevorzugt Quarzglas, Borosilikatglas, Kalk-Natron-Glas und/oder Gemische davon. Die erste und/oder zweite Scheibe der Isolierverglasung können auch thermoplastische polymere Scheiben umfassen. Thermoplastische polymere Scheiben umfassen bevorzugt Polycarbonat, Polymethylmethacrylat und/oder Copolymere und/oder Gemische davon. Darüberhinausgehende Scheiben der Isolierverglasung können die gleiche Zusammensetzung haben wie für die erste, zweite und dritte Scheibe erwähnt.

Die erste Scheibe und die zweite Scheibe verfügen über eine Dicke von 2 mm bis 50 mm, bevorzugt 2 mm bis 10 mm, besonders bevorzugt 4 mm bis 6 mm, wobei beide Scheiben auch unterschiedliche Dicken haben können.

Die erste Scheibe, die zweite Scheibe und weitere Scheiben können aus Einscheibensicherheitsglas, aus thermisch oder chemisch vorgespanntem Glas, aus Floatglas, aus extraklarem eisenarmem Floatglas, gefärbtem Glas, oder aus Verbundsicherheitsglas enthaltend eine oder mehrere dieser Komponenten ausgeführt sein. Die Scheiben können beliebige weitere Komponenten oder Beschichtungen, beispielsweise Low-E-Schichten oder anderweitige Sonnenschutzbeschichtungen, aufweisen.

Der äußere Scheibenzwischenraum, begrenzt durch erste Scheibe, zweite Scheibe und Außenfläche des Abstandhalters, ist zumindest teilweise, bevorzugt vollständig, mit einer äußeren Versiegelung verfüllt. Dadurch wird eine sehr gute mechanische Stabilisierung des Randverbunds erzielt.

Bevorzugt enthält die äußere Versiegelung Polymere oder silanmodifizierte Polymere, besonders bevorzugt organische Polysulfide, Silikone, raumtemperaturvernetzenden (RTV) Silikonkautschuk, peroxidischvernetzten Silikonkautschuk und/oder additions-vernetzten Silikonkautschuk, Polyurethane und/oder Butylkautschuk.

Das Dichtmittel zwischen der ersten Scheibenkontaktfläche und der ersten Scheibe, beziehungsweise zwischen der zweiten Scheibenkontaktfläche und der zweiten Scheibe, enthält bevorzugt ein Polyisobutylen. Das Polyisobutylen kann ein vernetzendes oder nicht vernetzendes Polyisobutylen sein.

Die Isolierverglasung ist optional mit einem Schutzgas, bevorzugt mit einem Edelgas, vorzugsweise Argon oder Krypton befüllt, die den Wärmeübergangswert im Isolierverglasungszwischenraum reduzieren.

Grundsätzlich sind verschiedenste Geometrien der Isolierverglasung möglich, beispielsweise rechteckige, trapezförmige und abgerundete Formen. Zur Herstellung runder Geometrien kann der Abstandhalter beispielsweise im erwärmten Zustand gebogen werden.

An den Ecken der Isolierverglasung sind die Abstandhalter beispielsweise über Eckverbinder miteinander verknüpft. Derartige Eckverbinder können beispielsweise als Kunststoffformteil mit Dichtung ausgeführt sein, in dem zwei Abstandhalter zusammenstoßen. Die Flachbandkabel zweier, über einen Eckverbinder zusammengesteckter, Abstandhalter können im Eckbereich beispielsweise über ein im äußeren Scheibenzwischenraum verlaufendes elektrisches Anschlusskabel verbunden sein.

In einer weiteren bevorzugten Ausführungsform wird der Abstandhalter an den Ecken der Verglasung nicht zertrennt und im erforderlichen Winkel über Eckverbinder verbunden, sondern wird unter Erwärmung in die entsprechende Eckgeometrie gebogen. Dies ist vorteilhaft, da sich auf diese Weise ein durchgängiges Flachbandkabel umlaufend entlang der Kante der Verglasung ergibt. Die elektrische Zuleitung ist somit auch im Eckbereich gesichert.

Die Erfindung umfasst ferner ein Verfahren zur Herstellung einer erfindungsgemäßen Isolierverglasung umfassend die Schritte:
a) Bereitstellung eines Abstandhalters mit integriertem Flachbandkabel,
b) Anbringen des Abstandhalters zwischen einer ersten Scheibe und einer zweiten Scheibe über jeweils eine Scheibenkontaktfläche des Abstandhalters mittels eines Dichtmittels und Einbringen eines elektrisch schaltbaren Funktionselements in den Verglasungsinnenraum,
c) Verpressen der Scheibenanordnung,
d) Einbringen einer äußeren Abdichtung in den äußeren Scheibenzwischenraum.

Das Flachbandkabel wird in Schritt b) elektrisch leitend mit dem elektrisch schaltbaren Funktionselement kontaktiert. Dazu wird ein Abschnitt des Flachbandkabels über ein elektrisches Anschlusskabel mit dem elektrisch schaltbaren Funktionselement kontaktiert.

Das elektrisch schaltbare Funktionselement wird gleichzeitig mit dem Anbringen der Scheiben in Schritt b) in den Verglasungsinnenraum eingebracht, da dieses in der Regel auf einer der nach Montage im Innenraum der Isolierverglasung liegenden Oberflächen der Scheiben angebracht ist.

Die Verklebung der Scheiben an den Scheibenkontaktflächen gemäß Schritt b) kann in einer beliebigen Reihenfolge durchgeführt werden. Optional kann die Verklebung beider Scheiben an den Scheibenkontaktflächen auch gleichzeitig erfolgen.

In Schritt d) wird der äußere Scheibenzwischenraum zumindest teilweise, bevorzugt vollständig, mit einer äußeren Abdichtung verfüllt. Die äußere Abdichtung wird bevorzugt direkt in den äußeren Scheibenzwischenraum hinein extrudiert, beispielsweise in Form einer plastischen Abdichtmasse.

Bevorzugt wird der Verglasungsinnenraum zwischen den Scheiben vor dem Verpressen der Anordnung (Schritt c)) mit einem Schutzgas gefüllt.

Handelt es sich bei der herzustellenden Verglasung um eine Mehrfachverglasung mit Doppelabstandhalter umfassend mindestens eine Nut, so wird mindestens eine dritte Scheibe vor Schritt b) in die Nut des Abstandhalters eingesetzt.

Die Erfindung umfasst des Weiteren die Verwendung eines erfindungsgemäßen Abstandhalters in Isolierverglasungen umfassend elektrisch schaltbare Funktionselemente, besonders bevorzugt in Doppel- oder Dreifachisolierverglasungen, insbesondere in Doppel- oder Dreifachisolierverglasungen umfassend ein SPD-, ein PDLC-, ein elektrochromes oder ein elektrolumineszentes Funktionselement. In sämtlichen dieser Verglasungen mit elektrisch schaltbaren Komponenten wird eine Stromversorgung im Verglasungsinnenraum benötigt, so dass eine elektrische Zuleitung vom äußeren Scheibenzwischenraum in den Verglasungsinnenraum geführt werden muss, was durch die Verwendung des erfindungsgemäßen Abstandhalters wesentlich verbessert wird.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein. Es zeigen:
Figur 1 eine schematische Darstellung des nicht erfindungsgemäßen Abstandhalters im Querschnitt,
Figur 2a eine schematische Darstellung einer nicht erfindungsgemäßen Isolierverglasung im Querschnitt,
Figur 2b die nicht erfindungsgemäße Isolierverglasung gemäß Figur 2a in Gesamtansicht,
Figur 3a eine Detailansicht der Außenseite eines erfindungsgemäßen Abstandhalters mit wasser- und dampfdichter Barrierefolie und integrierten Flachbandleitern,
Figur 3b eine Detailansicht der Außenseite eines erfindungsgemäßen Abstandhalters mit wasser- und dampfdichter Barrierefolie und darauf aufgebrachten Flachbandleitern,
Figur 4 eine Ausführungsform einer nicht erfindungsgemäßen Dreifachisolierverglasung mit Doppelabstandhalter im Querschnitt,
Figur 5 ein Flussdiagramm einer möglichen Ausführungsform des erfindungsgemäßen Verfahrens.

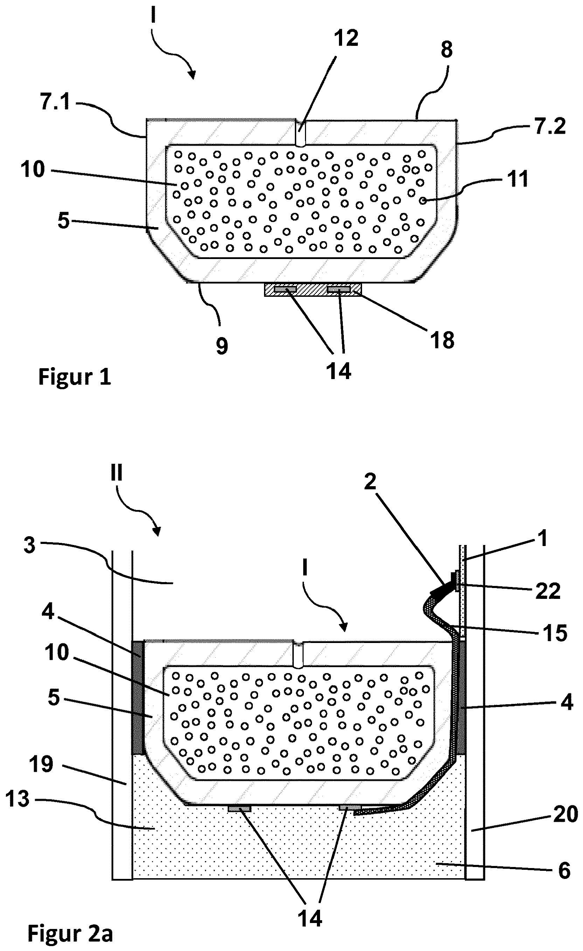

Figur 1 zeigt eine schematische Darstellung des nicht erfindungsgemäßen Abstandhalters I umfassend einen metallischen Grundkörper 5 und ein Flachbandkabel 14 an der Außenseite des Grundkörpers 5. Der metallische Grundkörper 5 ist ein Hohlkörperprofil umfassend zwei Scheibenkontaktflächen 7.1 und 7.2, eine Verglasungsinnenraumfläche 8, eine Außenfläche 9 und eine Hohlkammer 10. Der Grundkörper 5 besteht aus Aluminium. Die Außenfläche 9 besitzt eine abgewinkelte Form, wobei die den Scheibenkontaktflächen 7.1 und 7.2 benachbarten Abschnitte der Außenfläche in einem Winkel von 30° zu den Scheibenkontaktflächen 7.1 und 7.2 geneigt sind. Dies verbessert die Stabilität des Grundkörpers 5. Der Hohlkörper 10 ist mit einem Trockenmittel 11 gefüllt. Als Trockenmittel 11 wird Molekularsieb eingesetzt. Die Verglasungsinnenraumfläche 8 des Abstandhalters I weist Öffnungen 12 auf, die in regelmäßigen Abständen umlaufend entlang der Verglasungsinnenraumfläche 8 angebracht sind um einen Gasaustausch zwischen dem Innenraum der Isolierverglasung und der Hohlkammer 10 zu ermöglichen. Somit wird eventuell vorhandene Luftfeuchtigkeit im Innenraum vom Trockenmittel 11 aufgenommen. Die Öffnungen 12 sind als Schlitze mit einer Breite von 0,2 mm und einer Länge von 2 mm ausgeführt. Das Flachbandkabel 14 ist als zweiadriger Flachbandleiter in Form eines *Flat Laminated Kable (FLC)* aus zwei Kupferfolienstreifen umgeben von einer Isolierung 18 aus Polyethylenterephthalat ausgestaltet und an der Außenseite 9 des Abstandhalters I aufgebracht. Die stromführenden Adern des Flachbandleiters 14 sind von der Isolierung 18 umgeben, die sowohl die Adern gegeneinander als auch gegenüber dem Grundkörper 5 und der Umgebung isoliert. Das Flachbandkabel 14 ist mittels eines Schmelzklebstoffs (*Hotmelt*) angebracht, der die Außenfläche 9 des Abstandhalters I stoffschlüssig mit der Isolierung 18 verbindet.

Figur 2a zeigt eine nicht erfindungsgemäße Isolierverglasung II mit einem nicht erfindungsgemäßen Abstandhalter I. Zwischen einer ersten Scheibe 19 und einer zweiten Scheibe 20 ist über ein Dichtmittel 4 umlaufend der nicht erfindungsgemäße Abstandhalter I angebracht. Das Dichtmittel 4 verbindet dabei die Scheibenkontaktflächen 7.1 und 7.2 des Abstandhalters I mit den Scheiben 19 und 20. Der an die Verglasungsinnenraumfläche 8 des Abstandshalters I angrenzende Verglasungsinnenraum 3 wird als der von den Scheiben 19, 20 und dem Abstandhalter I begrenzte Raum definiert. Der an die Außenfläche 9 des Abstandhalters I angrenzende äußere Scheibenzwischenraum 13 ist ein streifenförmiger umlaufender Abschnitt der Verglasung, der von je einer Seite von den beiden Scheiben 19, 20 und auf einer weiteren Seite von dem Abstandhalter I begrenzt wird und dessen vierte Kante offen ist. Der Verglasungsinnenraum 3 ist mit Argon gefüllt. Zwischen jeweils einer Scheibenkontaktfläche 7.1 bzw. 7.2 und der benachbarten Scheibe 19 bzw. 20 ist ein Dichtmittel 4 eingebracht, das den Spalt zwischen Scheibe 19, 20 und Abstandhalter I abdichtet. Das Dichtmittel 4 ist Polyisobutylen. Auf der Außenfläche 9 ist eine äußere Abdichtung 6 im äußeren Scheibenzwischenraum 13 angebracht, die der Verklebung der ersten Scheibe 19 und der zweiten Scheibe 20 dient. Die äußere Abdichtung 6 besteht aus Silikon. Die äußere Abdichtung 6 schließt bündig mit den Scheibenkanten der ersten Scheibe 19 und der zweiten Scheibe 20 ab. Die zweite Scheibe 20 weist an der zum Verglasungsinnenraum 3 gerichteten Scheibenoberfläche ein elektrisch schaltbares Funktionselement 1 auf, das mit einem Sammelleiter 22 zur elektrischen Kontaktierung des Funktionselements 1 ausgestattet ist. Bei dem elektrisch schaltbaren Funktionselement 1 handelt es sich um eine elektrochrome Schicht. Der Abstandhalter I entspricht in Grundzügen dem in Figur 1 beschriebenen. Im Unterschied dazu handelt es sich um einen Abstandhalter mit polymerem Grundkörper 5. Der polymere Grundkörper 5 enthält Styrol-Acryl-Nitryl (SAN) und etwa 35 Gew.-% Glasfaser. Auf der Außenfläche 9 des Abstandhalters I ist eine Barrierefolie (nicht gezeigt) aufgebracht, die den Wärmeübergang durch den polymeren Grundkörper 5 in den Verglasungsinnenraum vermindert. Die Barrierefolie umfasst vier polymere Schichten aus Polyethylenterephthalat mit einer Dicke von 12 µm und drei metallische Schichten aus Aluminium mit einer Dicke von 50 nm. Die metallischen Schichten und die polymeren Schichten sind dabei jeweils alternierend angebracht, wobei die beiden äußeren Lagen von polymeren Schichten gebildet werden. Im Unterschied zu Figur 1 ist das Flachbandkabel 14 der Figur 2a in Form zweier Kupferfolienstreifen als Adern ohne weitere Isolierung ausgestaltet. Da die äußere Lage der Barrierefolie von einer polymeren Schicht gebildet wird, und diese nichtleitend für den elektrischen Strom ist, ist keine Isolierung des Flachbandkabels 14 notwendig. Die im äußeren Scheibenzwischenraum 13 eingebrachte äußere Abdichtung 6 bestehend aus Silikon dient auch als elektrische Isolierung gegenüber der Umgebung. Das Flachbandkabel 14 wird im Querschnitt gemäß Figur 2a von einem elektrischen Anschlusskabel 15 kontaktiert. Das Anschlusskabel 15 ist auf einer Ader des Flachbandkabels 14 aufgelötet und dadurch elektrisch leitend kontaktiert. Beide Adern des Flachbandkabels weisen unterschiedliche Polaritäten auf. Das elektrische Anschlusskabel 15 wird ausgehend vom Flachbandkabel 14 an der zweiten Scheibenkontaktfläche 7.2 des Abstandhalters I innerhalb des Dichtmittels 4 entlanggeführt und tritt in den Verglasungsinnenraum 3 ein. Das elektrische Anschlusskabel 15 wird dort über ein Kontaktelement 2 mit dem Sammelleiter 22 kontaktiert. Das Kontaktelement 2 ist ein sogenannter Crimpverbinder, wobei die Anbindung zwischen elektrischem Anschlusskabel 15 und Kontaktelement 2 durch Quetschen des Kabels in den Crimpverbinder erfolgt und das entgegengesetzte Ende des Crimpverbinders auf den Sammelleiter 22 gelötet ist. Durch die erfindungsgemäße Leitungsführung des Flachbandkabels 14 stoffschlüssig mit der Außenfläche 9 ist der äußere Scheibenzwischenraum 13 größtenteils frei von Leitungen, so dass ein ungehindertes automatisiertes Verfüllen mit der äußeren Abdichtung 6 erfolgen kann.

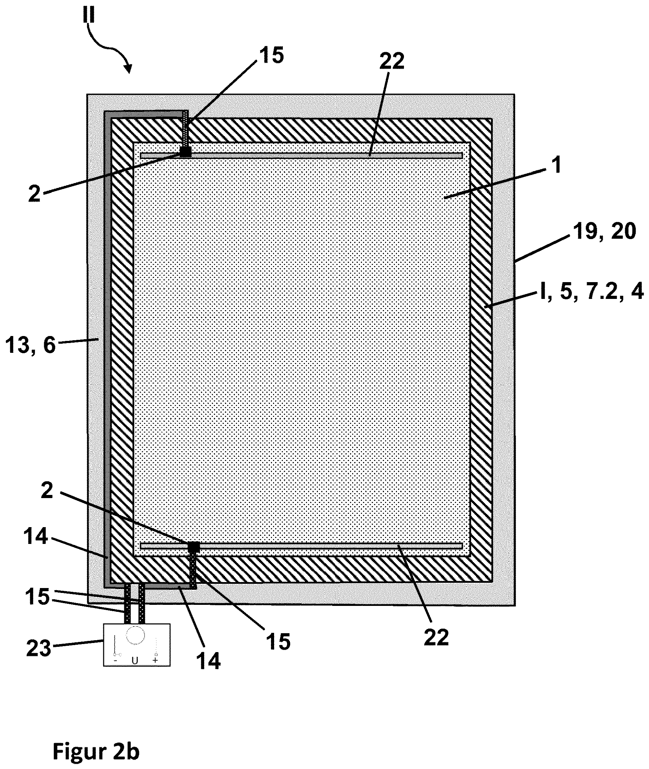

Figur 2b zeigt eine Gesamtansicht der nicht erfindungsgemäßen Isolierverglasung II gemäß Figur 2a. Die in Figur 2a beschriebene Kontaktierung eines auf der Außenfläche 9 des Abstandhalters I verlaufenden Flachbandkabels 14 mit dem Sammelleiter 22 des elektrisch schaltbaren Funktionselements 1 findet an zwei gegenüberliegenden Kanten der Isolierverglasung II statt, wobei an beiden Kanten Adern des Flachbandkabels 14 von entgegengesetzter Polarität über jeweils ein elektrisches Anschlusskabel 15 kontaktiert werden. An beiden Kanten tritt ein elektrisches Anschlusskabel 15, wie in Figur 2a beschrieben, entlang der zweiten Scheibenkontaktfläche 7.2 in den Verglasungsinnenraum 3 ein und wird über ein Kontaktelement 2 elektrisch leitend mit dem Sammelleiter 22 kontaktiert. Der Abstandhalter I ist an den Ecken der Isolierverglasung II gebogen, so dass das Flachbandkabel 14 an der Außenseite 9 des Abstandhalters I auch an den Ecken der Verglasung durchgängig ist. Beide Adern des Flachbandkabels 14 werden in Nachbarschaft zueinander mit jeweils einem weiteren elektrischen Anschlusskabel 15 verbunden und darüber mit einer Spannungsquelle 23 verbunden. Die Spannungsquelle 23 ist eine Gleichspannungsquelle zum Betreib des elektrochromen Funktionselements 1 und befindet sich außerhalb der Verglasung. Die an jeweils einer Ader des Flachbandleiters 14 kontaktierten elektrischen Anschlusskabel 15 sind mit unterschiedlichen Polen der Spannungsquelle verbunden, so dass zwischen den beiden gegenüberliegenden Sammelleitern 22 eine Potentialdifferenz entsteht. Die an den Sammelleitern 22 anliegende Spannung ruft eine lonenwanderung innerhalb der aktiven Schicht des elektrochromen Funktionselements hervor, wodurch dessen Transmission beeinflusst wird. Das Flachbandkabel 14 umfasst den Grundkörper 5 entlang seines gesamten Umfangs, da zur Herstellung des Abstandhalterrahmens ein Abstandhalter I verwendet wurde, der bereits mit integriertem Flachbandkabel 14 bereitgestellt wurde. Der übersichtlichen Darstellung halber werden in Figur 2a nur die Abschnitte des Flachbandkabels 14 gezeigt, die dem Anschluss des elektrochromen Funktionselementes 1 dienen.

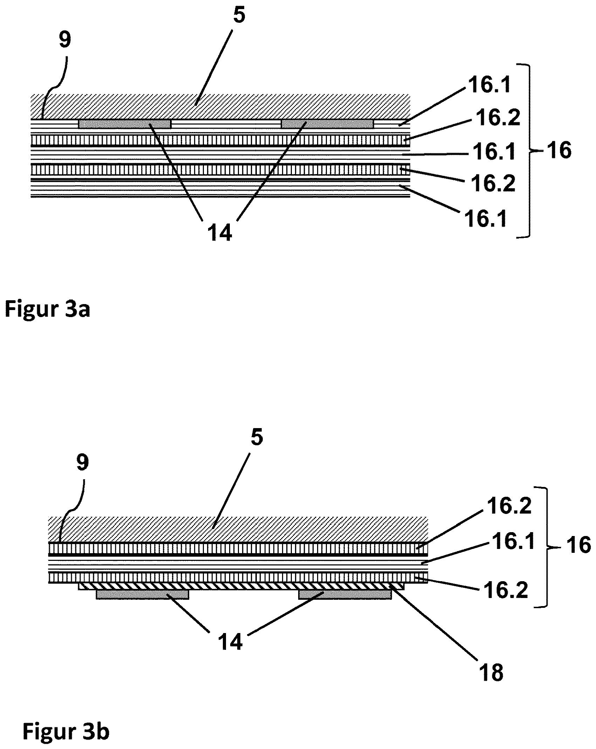

Figur 3a und 3b zeigen ein Detail der wasser- und dampfdichten Barrierefolie 16 an der Außenseite 9 eines polymeren Grundkörpers 5 des erfindungsgemäßen Abstandhalters I, wobei Flachbandkabel 14 umfassend jeweils zwei Adern aus Kupferfolienleitern an verschiedenen Stellen der Barrierefolie 16 angebracht sind. Der Abstandhalter I entspricht in seiner Geometrie und Materialzusammensetzung dem in Figur 2a beschriebenen. Auf der Außenfläche 9 des Abstandhalters I gemäß Figur 3a und 3b ist eine wasser- und dampfdichte Barrierefolie aufgebracht, die den Wärmeübergang durch den polymeren Grundkörper 5 in den Verglasungsinnenraum vermindert. Die Barrierefolie 16 gemäß Figur 3a umfasst drei polymere Schichten 16.1 aus Polyethylenterephthalat mit einer Dicke von 12 µm und drei metallische Schichten 16.2 aus Aluminium mit einer Dicke von 50 nm. Die metallischen Schichten 16.2 und die polymeren Schichten 16.1 sind dabei jeweils alternierend angebracht, wobei die beiden äußeren Lagen von polymeren Schichten 16.1 gebildet werden. Das Flachbandkabel 14 ist gemeinsam mit der wasser- und dampfdichten Barrierefolie 16 auf den Grundkörper 5 auflaminiert (Figur 3a). Dabei werden die Kupferfolienstreifen des Flachbandkabels 14 auf den Grundkörper 5 aufgelegt, durch die Schichten der Barrierefolie 16 abgedeckt und gemeinsam mit dieser unter Zuhilfenahme eines Klebstoffs auf den Grundkörper 5 auflaminiert. Die dem Grundkörper 5 benachbarte polymere Schicht 16.1 umschließt das Flachbandkabel 14 dabei und stellt gemeinsam mit dem polymeren Grundkörper 5 eine elektrische Isolierung des Flachbandkabels zur Umgebung hin sicher. Gemäß Figur 3b umfasst die Barrierefolie 16 zwei metallische Schichten 16.2, die auf beiden Oberflächen einer polymeren Schicht 16.1 angebracht sind. Das Flachbandkabel 14 ist auf der in Richtung des äußeren Scheibenzwischenraums weisenden Oberfläche der Barrierefolie 16 aufgebracht, wobei zwischen der benachbarten metallischen Schicht 16.2 und dem Flachbandkabel 14 eine Isolierung 18 aufgebracht ist. Die Isolierung 18 wird von einer Klebeschicht, hier ein Polyurethanklebstoff, gebildet. Die Klebeschicht wird auf die Barrierefolie 16 aufgetragen und das Flachbandkabel 14 in die noch nicht ausgehärtete Klebstoffschicht eingebracht. Die Klebstoffschicht dient als elektrische Isolierung des Flachbandkabels 14 gegenüber der darunterliegenden metallischen Schicht 16.2.

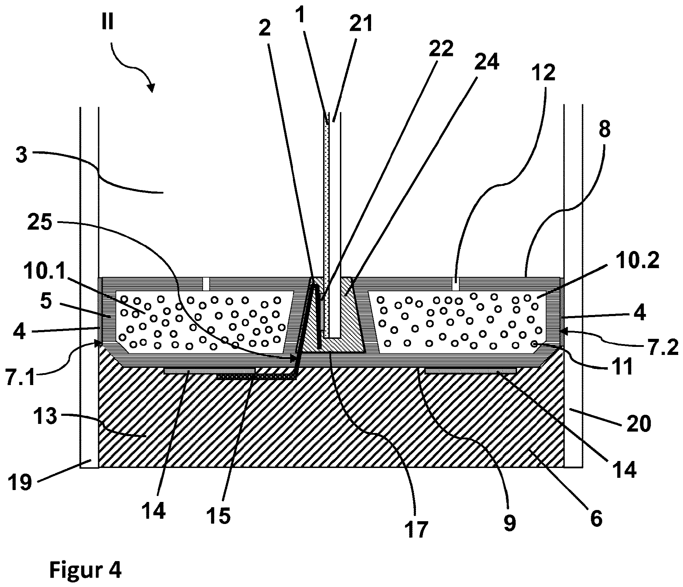

Figur 4 zeigt eine Ausführungsform einer nicht erfindungsgemäßen Dreifachisolierverglasung mit Doppelabstandhalter im Querschnitt. Der Grundaufbau der Isolierverglasung II entspricht dabei dem in Figur 2a und 2b beschriebenen. Im Unterschied dazu weist der polymere Grundkörper 5 zwischen der ersten Scheibenkontaktfläche 7.1 und der zweiten Scheibenkontaktfläche 7.2 eine Nut 17 auf, wobei zwischen der Nut 17 und der ersten Scheibenkontaktfläche 7.1 eine erste Hohlkammer 10.1 und zwischen der Nut 17 und der zweiten Scheibenkontaktfläche 7.2 eine zweite Hohlkammer 10.2 liegt. Die Seitenflanken der Nut 17 werden dabei von den Wänden der beiden Hohlkammern 10.1 und 10.2 gebildet, während die Bodenfläche der Nut 17 direkt an die Außenfläche 9 grenzt. Die Nut 17 verläuft parallel zu den Scheibenkontaktflächen 7. In die Nut 17 des Abstandhalters I ist eine dritte Scheibe 21 eingesetzt, die auf einer Scheibenoberfläche ein elektrisch schaltbares Funktionselement 1, hier ebenfalls ein elektrochromes Funktionselement, mit einem Sammelleiter 22 trägt. In der Nut 17 befindet sich ein Kontaktelement 2, das als Federkontakt ausgeführt ist. Das Kontaktelement 2 wird bereits vor Einsetzen der dritten Scheibe 21 in der Nut 17 angebracht. In der Bodenfläche der Nut 17 befindet sich eine Eintrittsöffnung 25 in Form eines Bohrlochs. Dieses wird vor Einsetzen des Kontaktelements 2 erzeugt, so dass das Kontaktelement 2 in dieses eingesteckt werden kann und das Kontaktelement durch den Grundkörper 5 hindurch bis zur Außenfläche ragt. Die dritte Scheibe 21 wird so in die Nut 17 eingesetzt, dass der Sammelleiter 22 in Richtung des Kontaktelementes 2 weist. Der Federkontakt wird bei Einsetzen der dritten Scheibe 21 gegen den Sammelleiter 22 gepresst, wodurch die gewünschte elektrische Kontaktierung zustande kommt. Die Nut 17 enthält ferner eine Einlage 24, die die Kante der dritten Scheibe 21 umschließt und sich bündig in die Nut 17 einpasst. Die Einlage 24 besteht aus Ethylen-Propylen-Dien-Kautschuk und ist im Bereich des Kontaktelements 2 ausgespart. Die Einlage 24 fixiert die dritte Scheibe 21 spannungsfrei und kompensiert eine Wärmeausdehnung der Scheibe. Des Weiteren verhindert die Einlage 24 eine Geräuschentwicklung durch Verrutschen der dritten Scheibe 21. Die nicht erfindungsgemäße Isolierverglasung II gemäß Figur 4 ermöglicht eine für den Betrachter unsichtbare elektrische Kontaktierung des elektrisch schaltbaren Funktionselementes, wobei auch der Sammelleiter 22 vollständig innerhalb der Nut 17 liegt und von dieser verdeckt wird.

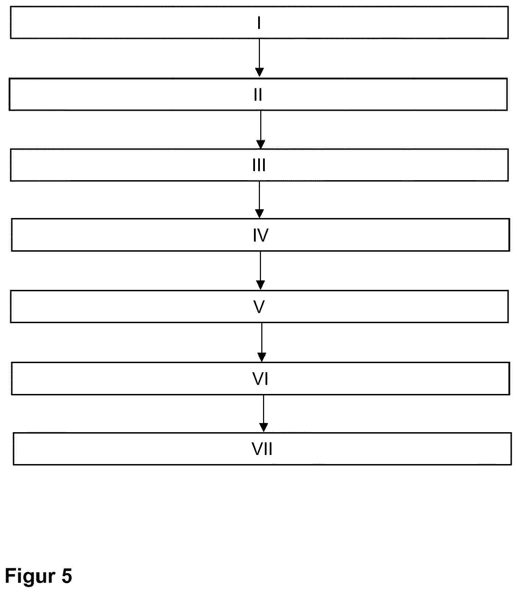

Figur 5 zeigt ein Fließdiagramm einer möglichen Ausführungsform des erfindungsgemäßen Verfahrens umfassend die Schritte:
I Bereitstellen eines polymeren Abstandhalters I mit integriertem Flachbandkabel 14,
II Vorfertigung eines umlaufenden Abstandhalterrahmens,
III elektrisches Kontaktieren mindestens eines elektrischen Anschlusskabels 15 an einer Ader des Flachbandkabels 14,
IV Anbringen einer Scheibe mit elektrisch schaltbarem Funktionselement 1 am Abstandhalter I und elektrische Kontaktierung von elektrischem Anschlusskabel 15 und Funktionselement 1,
V Anbringen mindestens einer weiteren Scheibe am Abstandhalter,
VI Verpressen der Scheibenanordnung und
VII Einbringen einer äußeren Abdichtung 6 in den äußeren Scheibenzwischenraum 13.

In Schritt IV wird im Fall einer Doppelverglasung eine erste Scheibe 19 oder zweite Scheibe 20 mit elektrochromem Funktionselement über ein Dichtmittel 4 an einer Scheibenkontaktfläche 7 des Abstandhalters I angebracht. Das elektrochrome Funktionselement ist dabei in Richtung des späteren Verglasungsinnenraums 3 gerichtet. In Schritt V wird daraufhin die zweite Scheibe 20 ebenfalls über ein Dichtmittel 4 an der noch zur Verfügung stehenden Scheibenkontaktfläche 7 angebracht.

Handelt es sich um eine Dreifachverglasung mit Doppelabstandhalter, so wird in Schritt IV eine dritte Scheibe 21 in die Nut 17 des Abstandhalters I eingesetzt und in Schritt V die erste und die zweite Scheibe 19 und 20 über ein Dichtmittel 4 an den Scheibenkontaktflächen 7 angebracht.

### Bezugszeichenliste

- I: Abstandhalter
- II: Isolierverglasung
- 1: elektrisch schaltbares Funktionselement
- 2: Kontaktelement
- 3: Verglasungsinnenraum
- 4: Dichtmittel
- 5: polymerer Grundkörper
- 6: äußere Abdichtung
- 7: Scheibenkontaktflächen
- 7.1: erste Scheibenkontaktfläche
- 7.2: zweite Scheibenkontaktfläche
- 8: Verglasungsinnenraumfläche
- 9: Außenfläche
- 10: Hohlkammern
- 10.1: erste Hohlkammer
- 10.2: zweite Hohlkammer
- 11: Trockenmittel
- 12: Öffnungen
- 13: äußerer Scheibenzwischenraum
- 14: Flachbandkabel
- 15: elektrisches Anschlusskabel
- 16: gas- und dampfdichte Barrierefolie
- 16.1: polymere Schicht der gas- und dampfdichten Barrierefolie
- 16.2: metallische oder keramische Schicht der gas- und dampfdichten Barrierefolie
- 17: Nut
- 18: elektrische Isolierung
- 19: erste Scheibe
- 20: zweite Scheibe
- 21: dritte Scheibe
- 22: Sammelleiter
- 23: Spannungsquelle
- 24: Einlage
- 25: Eintrittsöffnung

## Patentansprüche

1. Abstandhalter (I) mit integriertem Flachbandkabel (14) für Isolierverglasungen mindestens umfassend
- einen polymeren Grundkörper (5) umfassend zwei Scheibenkontaktflächen (7.1, 7.2), eine Verglasungsinnenraumfläche (8), eine Außenfläche (9) und
- mindestens ein Flachbandkabel (14) an der Außenfläche (9),
- wobei das Flachbandkabel (14) stoffschlüssig mit der Außenfläche (9) verbunden, unmittelbar über eine gas- und dampfdichte Barrierefolie (16) in den Abstandhalter (I) mit polymerem Grundkörper (5) integriert ist und die gas- und dampfdichte Barrierefolie (16) mindestens auf der Außenfläche (9) des polymeren Grundkörpers (5) aufgebracht ist und
- wobei das Flachbandkabel (14) zwischen der Außenfläche (9) des Grundkörpers (5) und der gas- und dampfdichten Barrierefolie (16) oder innerhalb der gas- und dampfdichten Barrierefolie (16) oder an der der Außenfläche (9) des Grundkörpers (5) abgewandten Oberfläche der gas- und dampfdichten Barrierefolie (16) verläuft.

2. Abstandhalter (I) nach Anspruch 1, wobei das Flachbandkabel (14) mit der Außenfläche (9) des Abstandhalters (I) verklebt, verschweißt, laminiert oder coextrudiert ist.

3. Abstandhalter (I) nach Anspruch 1 oder 2, wobei das Flachbandkabel (14) mindestens eine Ader in Form einer Metallfolie umfasst.

4. Abstandhalter (I) nach einem der Ansprüche 1 bis 3, wobei die gas- und wasserdichte Barrierefolie (16) eine alternierende Abfolge metallischer Schichten (16.1) und polymerer Schichten (16.2) enthält.

5. Abstandhalter (I) nach Anspruch 4, wobei das Flachbandkabel (14) innerhalb der gas- und dampfdichten Barrierefolie (16) verläuft und bevorzugt an zwei polymere Schichten (16.2) oder an eine polymere Schicht (16.2) und den polymeren Grundkörper (5) grenzt.

6. Abstandhalter (I) nach einem der Ansprüche 1 bis 5, wobei das Flachbandkabel (14) gemeinsam mit der Barrierefolie (16) auf den polymeren Grundkörper (5) auflaminiert ist oder das Flachbandkabel (14) über Coextrusion des polymeren Grundkörpers (5) und der Barrierefolie (16) auf den polymeren Grundkörper (5) aufgebracht ist.

7. Abstandhalter (I) nach einem der Ansprüche 1 bis 6, wobei der Abstandhalter (I) eine Nut (17) zur Aufnahme einer Scheibe umfasst, die parallel zur ersten Scheibenkontaktfläche (7.1) und zweiten Scheibenkontaktfläche (7.2) verläuft.

8. Isolierverglasung (II) mindestens umfassend eine erste Scheibe (19) und eine zweite Scheibe (20), einen die Scheiben umfassenden umlaufenden Abstandhalter (I) nach einem der Ansprüche 1 bis 7 und ein elektrisch schaltbares Funktionselement (1) im Verglasungsinnenraum (3),
wobei
- die erste Scheibe (19) an der ersten Scheibenkontaktfläche (7.1) anliegt,
- die zweite Scheibe (20) an der zweiten Scheibenkontaktfläche (7.2) anliegt,
- ein elektrisches Anschlusskabel (15) das Flachbandkabel (14) elektrisch leitend kontaktiert,
- das elektrische Anschlusskabel (15) zwischen erster Scheibe (19) und erster Scheibenkontaktfläche (7.1) oder zwischen zweiter Scheibe (20) und zweiter Scheibenkontaktfläche (7.2) verläuft und in den Verglasungsinnenraum (3) eintritt und
- das elektrische Anschlusskabel (15) das elektrisch schaltbare Funktionselement (1) im Verglasungsinnenraum (3) elektrisch leitend kontaktiert.

9. Isolierverglasung (II) mindestens umfassend eine erste Scheibe (19), eine zweite Scheibe (20) und eine dritte Scheibe (21), einen die Scheiben umfassenden umlaufenden Abstandhalter (I) nach Anspruch 7 und ein elektrisch schaltbares Funktionselement (1) auf mindestens einer Oberfläche der dritten Scheibe (21)
wobei
- die erste Scheibe (19) an der ersten Scheibenkontaktfläche (7.1) anliegt,
- die zweite Scheibe (20) an der zweiten Scheibenkontaktfläche (7.2) anliegt,
- die dritte Scheibe (21) in die Nut (17) des Abstandhalters (I) eingesetzt ist,
- ein elektrisches Anschlusskabel (15) das Flachbandkabel (14) elektrisch leitend kontaktiert und
- das elektrische Anschlusskabel (15) das elektrisch schaltbare Funktionselement (1) über eine Eintrittsöffnung in der Bodenfläche der Nut (17) elektrisch leitend kontaktiert.

10. Isolierverglasung (II) nach Anspruch 8 oder 9, wobei das elektrische Anschlusskabel (15) das elektrisch schaltbare Funktionselement (1) über ein Kontaktelement (2), bevorzugt über einen Federkontakt, elektrisch leitend kontaktiert.

11. Verfahren zur Herstellung einer Isolierverglasung (II) nach einem der Ansprüche 8 bis 10, wobei zumindest
a) ein Abstandhalter (I) mit integriertem Flachbandkabel (14) bereitgestellt wird,
b) der Abstandhalter (I) mittels eines Dichtmittels (4) über jeweils eine Scheibenkontaktfläche (7.1, 7.2) zwischen einer ersten Scheibe (1) und einer zweiten Scheibe (2) angebracht wird und ein elektrisch schaltbares Funktionselement (1) in den Verglasungsinnenraum (3) eingebracht wird,
c) die Anordnung verpresst wird und
d) in den äußeren Scheibenzwischenraum (13) eine äußere Abdichtung (6) eingebracht wird,
wobei das Flachbandkabel (14) in Schritt b) elektrisch leitend mit dem elektrisch schaltbaren Funktionselement (1) kontaktiert wird.

12. Verfahren nach Anspruch 11, wobei vor Schritt b) eine dritte Scheibe (21) in eine Nut (17) des Abstandhalters (I) eingesetzt wird.

13. Verwendung eines Abstandhalters (I) nach einem der Ansprüche 1 bis 7 in Isolierverglasungen (II) umfassend elektrisch schaltbare Funktionselemente (22), bevorzugt umfassend die ein SPD-, ein PDLC-, ein elektrochromes oder ein elektrolumineszentes Funktionselement.

## Claims

1. Spacer (I) with an integrated ribbon cable (14) for insulating glazings at least comprising
- a polymeric main body (5) comprising two pane contact surfaces (7.1, 7.2), a glazing interior surface (8), an outer surface (9), and
- at least one ribbon cable (14) on the outer surface (9),
- wherein the ribbon cable (14) is materially bonded to the outer surface (9), is integrated directly via a gas- and vapor-tight barrier film (16) into the spacer (I) with a polymeric main body (5), and the gas- and vapor-tight barrier film (16) is applied at least on the outer surface (9) of the polymeric main body (5), and
- wherein the ribbon cable (14) runs between the outer surface (9) of the main body (5) and the gas- and vapor-tight barrier film (16) or within the gas- and vapor-tight barrier film (16) or on the surface of the gas- and vapor-tight barrier film (16) facing away from the outer surface (9) of the main body (5).

2. Spacer (I) according to claim 1, wherein the ribbon cable (14) is glued, welded, or laminated to the outer surface (9) of the spacer (I), or is coextruded therewith.

3. Spacer (I) according to claim 1 or 2, wherein the ribbon cable (14) includes at least one wire in the form of a metal foil.

4. Spacer (I) according to one of claims 1 through 3, wherein the gas- and water-tight barrier film (16) contains an alternating sequence of metallic layers (16.1) and polymeric layers (16.2).

5. Spacer (I) according to claim 4, wherein the ribbon cable (14) runs within the gas- and vapor-tight barrier film (16) and is preferably adjacent two polymeric layers (16.2) or a polymeric layer (16.2) and the polymeric main body (5).

6. Spacer (I) according to one of claims 1 through 5, wherein the ribbon cable (14) is laminated together with the barrier film (16) onto the polymeric main body (5), or the ribbon cable (14) is applied on the polymeric main body (5) by coextrusion of the polymeric main body (5) and the polymeric barrier film (16).

7. Spacer (I) according to one of claims 1 through 6, wherein the spacer (I) includes a groove (17) for receiving a pane, which extends parallel to the first pane contact surface (7.1) and the second pane contact surface (7.2).

8. Insulating glazing (II) at least comprising a first pane (19) and a second pane (20), a circumferential spacer (I) according to one of claims 1 through 7 surrounding the panes, and an electrically switchable functional element (1) in the glazing interior (3),
wherein
- the first pane (19) rests against the first pane contact surface (7.1),
- the second pane (20) rests against the second pane contact surface (7.2),
- an electrical connection cable (15) makes electrically conductive contact with the ribbon cable (14),
- the electrical connection cable (15) runs between a first pane (19) and a first pane contact surface (7.1) or between a second pane (20) and a second pane contact surface (7.2) and enters the glazing interior (3), and
- the electrical connection cable (15) makes electrically conductive contact with the electrically switchable functional element (1) in the glazing interior (3).

9. Insulating glazing (II) at least comprising a first pane (19), a second pane (20), and a third pane (21), a circumferential spacer (I) according to claim 7 surrounding the panes, and an electrically switchable functional element (1) on at least one surface of the third pane (21)
wherein
- the first pane (19) rests against the first pane contact surface (7.1),
- the second pane (20) rests against the second pane contact surface (7.2),
- the third pane (21) is inserted into the groove (17) of the spacer (I),
- an electrical connection cable (15) makes electrically conductive contact with the ribbon cable (14), and
- the electrical connection cable (15) makes electrically conductive contact with the electrically switchable functional element (1) via an entry opening in the bottom surface of the groove (17).

10. Insulating glazing (II) according to claim 8 or 9, wherein the electrical connection cable (15) makes electrically conductive contact with the electrically switchable functional element (1) via a contact element (2), preferably via a spring contact.

11. Method for producing an insulating glazing (II) according to one of claims 8 through 10, wherein at least
a) a spacer (I) having an integrated ribbon cable (14) is provided,
b) the spacer (I) is attached by means of a sealant (4) via a pane contact surface (7.1, 7.2) in each case between a first pane (1) and a second pane (2), and an electrically switchable functional element (1) is inserted into the glazing interior (3),
c) the assembly is pressed, and
d) an outer seal (6) is introduced into the outer interpane space (13),
wherein, in step b), the ribbon cable (14) makes electrically conductive contact with the electrically switchable functional element (1).

12. Method according to claim 11, wherein, before step b), a third pane (21) is inserted into a groove (17) of the spacer (I).

13. Use of a spacer (I) according to one of claims 1 through 7 in insulating glazings (II) including electrically switchable functional elements (22), preferably including an SPD, a PDLC, an electrochromic, or an electroluminescent functional element.

## Revendications

1. - Espaceur (I) avec câble plat intégré (14) pour vitrages isolants, comportant au moins
- un corps de base polymère (5), comportant deux surfaces de contact de vitre (7.1 , 7.2), une surface d'espace intérieur de vitrage (8), une surface extérieure (9) et
- au moins un câble plat (14) sur la surface extérieure (9),
- le câble plat (14) étant relié par liaison de matière à la surface extérieure (9), intégré au corps de base polymère (5) directement par un film barrière (16) étanche au gaz et à la vapeur dans l'espaceur (I) et le film barrière (16) étanche au gaz et à la vapeur étant appliqué au moins sur la surface extérieure (9) du corps de base polymère (5),
- le câble plat (14) s'étendant entre la surface extérieure (9) du corps de base (5) et le film barrière (16) étanche au gaz et à la vapeur ou à l'intérieur du film barrière (16) étanche au gaz et à la vapeur, ou sur la surface du film barrière (16) étanche au gaz et à la vapeur, qui est opposée à la surface extérieure (9) du corps de base (5).

2. - Espaceur (I) selon la revendication 1, dans lequel le câble plat (14) est collé, soudé, laminé ou coextrudé à la surface extérieure (9) de l'espaceur (I).

3. - Espaceur (I) selon l'une des revendications 1 ou 2, dans lequel le câble plat (14) comporte au moins un brin sous la forme d'une feuille métallique.

4. - Espaceur (I) selon l'une des revendications 1 à 3, dans lequel le film barrière (16) étanche au gaz et à l'eau contient une succession en alternance de couches métalliques (16.1) et de couches polymères (16.2).

5. - Espaceur (I) selon la revendication 4, dans lequel le câble plat (14) s'étend à l'intérieur du film barrière (16) étanche au gaz et à la vapeur et est de préférence adjacent à deux couches polymères (16.2) ou à une couche polymère (16.2) et au corps de base polymère (5) .

6. - Espaceur (I) selon l'une des revendications 1 à 5, dans lequel le câble plat (14) est laminé conjointement avec le film barrière (16) sur le corps de base polymère (5) ou le câble plat (14) est appliqué sur le corps de base polymère (5) par coextrusion du corps de base polymère (5) et du film barrière (16).

7. - Espaceur (I) selon l'une des revendications 1 à 6, dans lequel l'espaceur (I) comporte une rainure (17) destinée à recevoir une vitre, qui s'étend parallèlement à la première surface de contact de vitre (7.1) et à la seconde surface de contact de vitre (7.2).

8. - Vitrage isolant (II) comportant au moins une première vitre (19) et une seconde vitre (20), un espaceur périphérique (I) entourant les vitres selon l'une des revendications 1 à 7 et un élément fonctionnel (1) commutable électriquement dans l'espace intérieur de vitrage (3)
dans lequel :
- la première vitre (19) s'appuie sur la première surface de contact de vitre lequel (7.1) ;
- la seconde vitre (20) s'appuie sur la seconde surface de contact de vitre (7.2);
- un câble de connexion électrique (15) établit un contact conducteur de l'électricité avec le câble plat (14) ;
- le câble de connexion électrique (15) s'étend entre la première vitre (19) et la première surface de contact de vitre (7.1) ou entre la seconde vitre (20) et la seconde surface de contact de vitre (7.2) et pénètre dans l'espace intérieur de vitrage (3) ; et
- le câble de connexion électrique (15) établit un contact conducteur de l'électricité avec l'élément fonctionnel (1) commutable électriquement dans l'espace intérieur de vitrage (3).

9. - Vitrage isolant (II) comportant au moins une première vitre (19), une deuxième vitre (20) et une troisième vitre (21), un espaceur périphérique (I) entourant les vitres selon la revendication 7 et un élément fonctionnel (1) commutable électriquement sur au moins une surface de la troisième vitre (21),
dans lequel :
- la première vitre (19) s'appuie sur la première surface de contact de vitre (7.1) ;
- la deuxième vitre (20) s'appuie sur la seconde surface de contact de vitre (7.2) ;
- la troisième vitre (21) est introduite dans la rainure (17) de l'espaceur (I) ;
- un câble de connexion électrique (15) établit un contact conducteur de l'électricité avec le câble plat (14) ; et
- le câble de connexion électrique (15) établit un contact conducteur de l'électricité avec l'élément fonctionnel (1) commutable électriquement par l'intermédiaire d'une ouverture d'entrée dans la face de fond de la rainure (17) .

10. - Vitrage isolant (II) selon l'une des revendications 8 ou 9, dans lequel le câble de connexion électrique (15) établit un contact conducteur de l'électricité avec l'élément fonctionnel (1) commutable électriquement par l'intermédiaire d'un élément de contact (2), de préférence par l'intermédiaire d'un contact à ressort.

11. - Procédé de fabrication d'un vitrage isolant (II) selon l'une des revendications 8 à 10, dans lequel au moins
a) un espaceur (I) avec câble plat intégré (14) est mis à disposition ;
b) l'espaceur (I) est fixé à l'aide d'un moyen d'étanchéité (4) par l'intermédiaire d'une surface de contact de vitre respective (7.1, 7.2) entre une première vitre (1) et une deuxième vitre (2) et un élément fonctionnel (1) commutable électriquement est introduit dans l'espace intérieur de vitrage (3) ;
c) l'agencement est pressé ; et
d) un joint d'étanchéité extérieur (6) est introduit dans l'espace entre vitres extérieur (13),
le câble plat (14) étant mis en contact conducteur de l'électricité avec l'élément fonctionnel (1) commutable électriquement à l'étape b).

12. - Procédé selon la revendication 11, dans lequel, avant l'étape b), une troisième vitre (21) est introduite dans une rainure (17) de l'espaceur (I).

13. - Utilisation d'un espaceur (I) selon l'une des revendications 1 à 7 dans des vitrages isolants (II) comportant des éléments fonctionnels (22) commutables électriquement, de préférence comportant un élément fonctionnel SPD, un élément fonctionnel PDLC, un élément fonctionnel électrochrome ou un élément fonctionnel électroluminescent.
